(19) **Europäisches Patentamt / European Patent Office / Office européen des brevets**

(11) **EP 4 645 975 A1**

(12) **EUROPEAN PATENT APPLICATION**
published in accordance with Art. 153(4) EPC

(43) Date of publication:
05.11.2025 Bulletin 2025/45

(21) Application number: 24753656.8

(22) Date of filing: 08.02.2024

(51) International Patent Classification (IPC):
$H04W\ 64/00$ (2009.01)   $H04W\ 8/00$ (2009.01)
$G01S\ 17/00$ (2020.01)   $G01S\ 13/06$ (2006.01)
$H04W\ 72/04$ (2023.01)   $H04W\ 48/10$ (2009.01)
$H04W\ 24/10$ (2009.01)   $H04W\ 88/08$ (2009.01)
$H04W\ 88/18$ (2009.01)

(52) Cooperative Patent Classification (CPC):
G01S 13/06; G01S 17/00; H04W 8/00;
H04W 24/10; H04W 48/10; H04W 64/00;
H04W 72/04; H04W 88/08; H04W 88/18

(86) International application number:
PCT/KR2024/001889

(87) International publication number:
WO 2024/167335 (15.08.2024 Gazette 2024/33)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 08.02.2023 KR 20230016928

(71) Applicant: **Samsung Electronics Co., Ltd.**
**Suwon-si, Gyeonggi-do 16677 (KR)**

(72) Inventors:
• **KIM, Gibum**
**Suwon-si Gyeonggi-do 16677 (KR)**
• **LEE, Kwonjong**
**Suwon-si Gyeonggi-do 16677 (KR)**
• **CHOI, Jinho**
**Suwon-si Gyeonggi-do 16677 (KR)**

(74) Representative: **Nederlandsch Octrooibureau**
**P.O. Box 29720**
**2502 LS The Hague (NL)**

(54) **SYSTEM, METHOD, AND APPARATUS FOR SUPPORTING COMMUNICATION AND SENSING**

(57) The present disclosure relates to a 5G or 6G communication system for supporting a higher data transmission rate than a 4G communication system such as LTE. A method for a first TRP in a system supporting communication and sensing, according to the present disclosure, comprises the steps of: identifying first sensing configuration information for a bistatic sensing operation; transmitting, to a terminal, second sensing configuration information generated on the basis of the first sensing configuration information; on the basis of the first sensing configuration information, transmitting a sensing signal for the bistatic sensing operation; and receiving a sensing result report from a second TRP associated with the first TRP, and the first sensing configuration information comprises resource allocation information for the bistatic sensing operation.

FIG. 4

**Description**

[Technical Field]

The disclosure relates to a system, method, and device for supporting communication and sensing.

[Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100μsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

[Detailed Description of the Invention]

[Technical Problem]

This disclosure relates to a method and device for providing bistatic sensing in a system supporting communication and sensing.

[Technical Problem]

According to an embodiment of the disclosure, a method of a first transmission and reception point (TRP) in a system supporting communication and sensing may comprise identifying first sensing configuration information for a bistatic sensing operation, transmitting second sensing configuration information generated based on the first sensing configuration information to a UE, transmitting a sensing signal for the bistatic sensing operation based on the first sensing configuration information, and receiving a sensing result report from a second TRP associated with the first TRP. The first sensing configuration information may include resource allocation information for the bistatic sensing operation.

According to an embodiment of the disclosure, a method of a second transmission and reception point (TRP) in a system supporting communication and sensing may comprise receiving first sensing configuration information for a bistatic sensing operation, transmitting second sensing configuration information generated based on the first sensing configuration information to a UE, receiving a sensing signal for the bistatic sensing operation transmitted from a first TRP based on the first sensing configuration information, and transmitting a sensing result report to the first TRP. The first sensing configuration information may include resource allocation information for the bistatic sensing operation.

According to an embodiment of the disclosure, a first transmission and reception point (TRP) in a system supporting communication and sensing may comprise memory and a processor connected to the memory. The processor may be configured to identify first sensing configuration information for a bistatic sensing operation, transmit second sensing configuration information generated based on the first sensing configuration information to a UE, transmit a sensing signal for the bistatic sensing operation based on the first sensing configuration information, and receive a sensing result report from a second TRP associated with the first TRP. The first sensing configuration information may include resource allocation information for the bistatic sensing operation.

According to an embodiment of the disclosure, a second transmission and reception point (TRP) in a system supporting communication and sensing may comprise memory and a processor connected to the memory. The processor may be configured to receive first sensing configuration information for a bistatic sensing operation, transmit second sensing configuration information generated based on the first sensing configuration information to a UE, and receive a sensing signal for the bistatic sensing operation transmitted from a first TRP based on the first sensing configuration information, and transmit a sensing result report to the first TRP. The first sensing configuration information may include resource allocation information for the bistatic sensing operation.

[Brief Description of Drawings]

FIG. 1 is a block diagram illustrating a communication system according to an embodiment of the disclosure.

FIG. 2A is a view illustrating a basic structure of a time-frequency domain in a wireless communication system according to an embodiment of the disclosure.

FIG. 2B is a view illustrating the structures of a frame, a subframe, and a slot in a wireless communication system according to an embodiment of the disclosure.

FIG. 3 illustrates an JCAS system according to an embodiment of the disclosure.

FIG. 4 illustrates a bistatic sensing structure of a JCAS system according to an embodiment of the disclosure.

FIG. 5 illustrates a sensing procedure in a JCAS system using a bistatic sensing structure according to an embodiment of the disclosure.

FIGS. 6A and 6B illustrate an example of resource allocation for sensing according to an embodiment of the disclosure.

FIG. 7 is a block diagram illustrating a transmission JCAS-enabled device and a reception JCAS-enabled device using different waveforms for sensing and communication according to an embodiment of the disclosure.

FIGS. 8A and 8B are block diagrams illustrating a transmission JCAS-enabled device and a reception JCAS-enabled device using the same waveform for sensing and communication according to an embodiment of the disclosure.

FIG. 9A illustrates an example of sensing configuration information according to an embodiment of the disclosure.

FIG. 9B illustrates an example of sensing configuration information according to an embodiment.

FIG. 9C illustrates an example of sensing configuration information according to an embodiment.

FIG. 9D illustrates an example of sensing configuration information according to an embodiment.

FIG. 10A illustrates a sensing configuration procedure according to an embodiment of the disclosure.

FIG. 10B illustrates a sensing configuration procedure according to an embodiment of the disclosure.

FIG. 11A illustrates a sensing configuration procedure according to an embodiment of the disclosure.

FIG. 11B illustrates a sensing configuration procedure using system information (SI) according to an embodiment of the disclosure.

FIG. 11C illustrates a sensing configuration procedure using system information (SI) according to an embodiment of the disclosure.

FIG. 12A illustrates an example of sensing resource allocation according to an embodiment of the disclosure.

FIG. 12B illustrates an example of sensing resource allocation according to an embodiment of the disclosure.

FIG. 13 illustrates an example of sensing resource allocation according to a periodic transmission mode according to an embodiment of the disclosure.

FIG. 14A illustrates a sensing procedure according to a periodic transmission mode according to an embodiment of the disclosure.

FIG. 14B illustrates a sensing procedure according to a periodic transmission mode according to an embodiment of the disclosure.

FIG. 15 illustrates a sensing result reporting procedure according to an embodiment of the disclosure.

FIG. 16A illustrates a sensing result reporting procedure according to an embodiment of the disclosure.

FIG. 16B illustrates a sensing result reporting procedure according to an embodiment of the disclosure.

FIG. 17 illustrates a configuration of a sensing result report according to an embodiment of the disclosure.

FIG. 18 illustrates a configuration of a sensing result report according to an embodiment of the disclosure.

FIG. 19 is a view illustrating a downlink (DL) communication operation of a UE in a JCAS system according to an embodiment of the disclosure.

FIG. 20 is a view illustrating an uplink (UL) communication operation of a UE in a JCAS system according to an embodiment of the disclosure.

FIG. 21 is a view illustrating an example configuration of a UE according to an embodiment of the disclosure.

FIG. 22 is a view illustrating an example configuration of a base station according to an embodiment of the disclosure.

[Mode for Carrying out the Invention]

In describing embodiments, the description of technologies that are known in the art and are not directly related to the present invention is omitted. This is for further clarifying the gist of the present disclosure without making it unclear.
For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification. When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

For ease of description, some of the terms or names defined in the 3rd generation partnership project (3GPP) standards (standards for 5G, new radio (NR), long-term evolution (LTE), or similar systems) may be used. However, the disclosure is not limited by such terms and names and may be likewise applicable to systems conforming to other standards. Further, the disclosure is not limited to the terms used in the following embodiments, and the terms may be replaced with other terms denoting objects with equivalent technical meanings.

[Communication system]

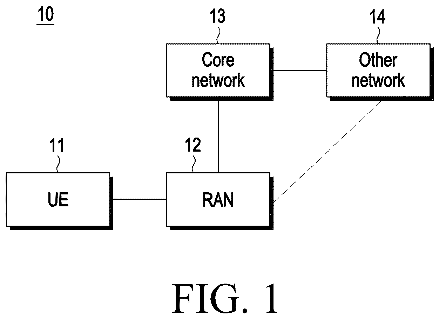

FIG. 1 is a block diagram illustrating a communication system according to an embodiment of the disclosure.

Referring to FIG. 1, a communication system 10 may include a user equipment (UE) 11, a radio access network (RAN) 12, a core network (CN) 13, and/or another network 14.

The UE 11 may be a user device capable of performing communication functions. For example, the UE 11 may include a user equipment (UE), a mobile station (MS), a wireless transmit/receive unit (WTRU), a cellular phone, a smartphone, a machine type communication (MTC) device, a computer, a wireless sensor, a vehicle, an IoT device, and/or other electronic devices capable of performing communication functions. The UE 11 may communicate with other UEs or with one or more network nodes within the radio access network 12.

The radio access network 12 is a next-generation radio access network (e.g., 6G, or later radio access network, etc.) or a legacy radio access network (e.g., 5G (NR), 4G (e.g., LTE), 3G, etc.). The radio access network 12 (or network node(s) within the radio access network 12) may communicate with one or more network nodes in the core network 13 and the UE 11. Further, the radio access network 12 may optionally communicate with another network 13.

The radio access network 12 may include one or more network nodes (e.g., base station (BS)). The base station is an entity that performs resource allocation of the UE 11, and may be a radio base station, a nodeB, an evolved node B (eNodeB or eNB), a next-generation node B (gNodeB or gNB), a radio access unit, a network node, a network device, a node on a network, a base station controller, a transmission point (TP), an access point (AP), a relay station, a base band unit (BBU), a remote radio unit (RU), a remote radio head (RH), or a transmit and receive point (TRP). As an embodiment, the base station may be divided into a central unit (CU) and at least one distribute unit (DU) controlled/managed by the CU. In the disclosure, downlink (DL) refers to a wireless transmission path of signal transmitted from the base station to the UE 11, and uplink (UL) refers to a wireless transmission path of signal transmitted from the UE 11 to the base station. In the disclosure, the operation of the base station itself or a divided component (e.g., CU or DU) of the base station may be understood of the operation of the base station.

The core network 13 is part of the communication system 10 and may be dependent on or independent from the radio access technology (RAT) used in the communication system 10.

According to an embodiment, the core network 13 may be a 5G core network (5GC). According to an embodiment, the 5GC may include an access and mobility management function (AMF) for managing access and mobility of the UE 11, a session management function (SMF) for managing a packet data unit (PDU) session of the UE 11, a user plane function (UPF) connected to a data network (DN) to perform a data transfer role, a policy control function (PCF) for providing a policy control function, a user data management (UDM) for providing data management functions such as subscriber data and policy control data, a unified data repository (UDR) for storing data of various network functions (NFs), a network slice selection function (NSSF) for selecting network slice instances for servicing the UE 11, and/or a network slice admission control function (NSACF) for monitoring and controlling the number of registered UEs and PDU sessions.

According to an embodiment, the core network 13 may be a core network (e.g., 6G core network, 4G (LTE) core network, etc.) other than 5GC. In this case, the core network 13 may include a network function (node) that performs the same or similar functions as the network functions (nodes) of the 5GC described above.

The other network 14 is a network other than the core network 13 and may communicate with at least one network node within the core network 13. Further, the other network 14 may communicate with at least one network node of the radio access network 12. As an embodiment, the other network 14 may be a data network, a network providing an application function (AF) that provides an application service, or an Internet network.

[Time-frequency resource]

The frame structure of a wireless communication system (e.g., a 5G system) is described below in more detail with reference to the drawings.

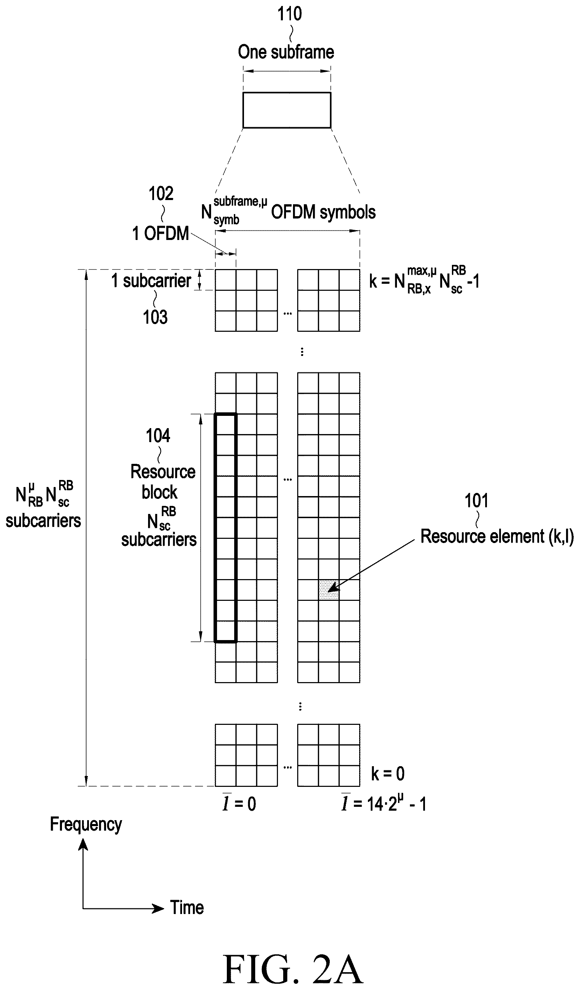

FIG. 2A is a view illustrating a basic structure of a time-frequency domain in a wireless communication system according to an embodiment of the disclosure.

In FIG. 2A, the horizontal axis refers to the time domain, and the vertical axis refers to the frequency domain. A basic unit of a resource in the time and frequency domain is a resource element (RE) 101, which may be defined by one orthogonal frequency division multiplexing (OFDM) symbol 102 on the time axis, and by one subcarrier 103 on the frequency axis. In the frequency domain. $N_{SC}^{RB}$ (e.g., 12) consecutive REs may constitute one resource block (RB) 104.

In FIG. 2A, $N_{symb}^{subframe,\mu}$ is the number of OFDM symbols per subframe 110 for subcarrier spacing setting ($\mu$).

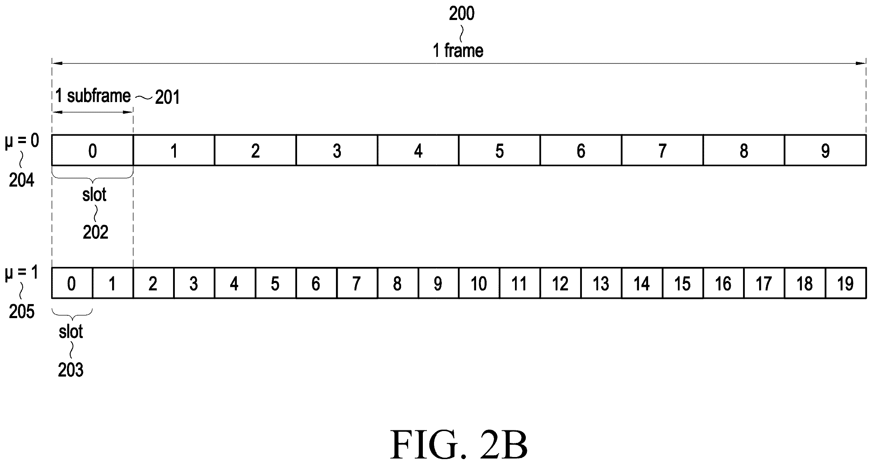

FIG. 2B is a view illustrating the structures of a frame, a subframe, and a slot in a wireless communication system according to an embodiment of the disclosure.

FIG. 2 illustrates example structures of a frame 200, a subframe 201, and a slot 202. One frame 200 may be defined as 10 ms. One subframe 201 may be defined as 1 ms, and thus, one frame 200 may consist of a total of 10 subframes 201. One slot 202 or 203 may be defined as 14 OFDM symbols (that is, the number ($N_{symb}^{slot}$) of symbols per slot=14). One subframe 201 may be composed of one or more slots 202 and 203, and the number of slots 202 and 203 per subframe 201 may differ depending on $\mu$ (204 or 205), which is a set value for the subcarrier spacing. FIG. 2 illustrates an example in which the subcarrier spacing setting value $\mu$=0 (204) and an example in which the subcarrier spacing setting value $\mu$=1 (205). When $\mu$ = 0 (204), one subframe 201 may consist of one slot 202, and when $\mu$ = 1 (205), one subframe 201 may consist of two slots (203). In other words, according to the set subcarrier spacing value μ, the number ( $N_{symb}^{subframe,\mu}$ ) of slots per subframe may vary, and accordingly, the number ( $N_{slot}^{frame,\mu}$ ) of slots per frame may differ. According to each subcarrier spacing μ, $N_{symb}^{subframe,\mu}$ and $N_{slot}^{frame,\mu}$ may be defined in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Joint communications and sensing (JCAS) system/network]

Below, a system that performs both communication and sensing is described. For example, a system that integrates communication and sensing functions into a single system is described. The system that performs both communication and sensing may be referred to as a JCAS system, but the term denoting the system is not limited thereto. For example, the JCAS system may be referred to by other terms, such as an integrated sensing and communication (ISAC) system or a joint sensing and communications (JSAC) system.

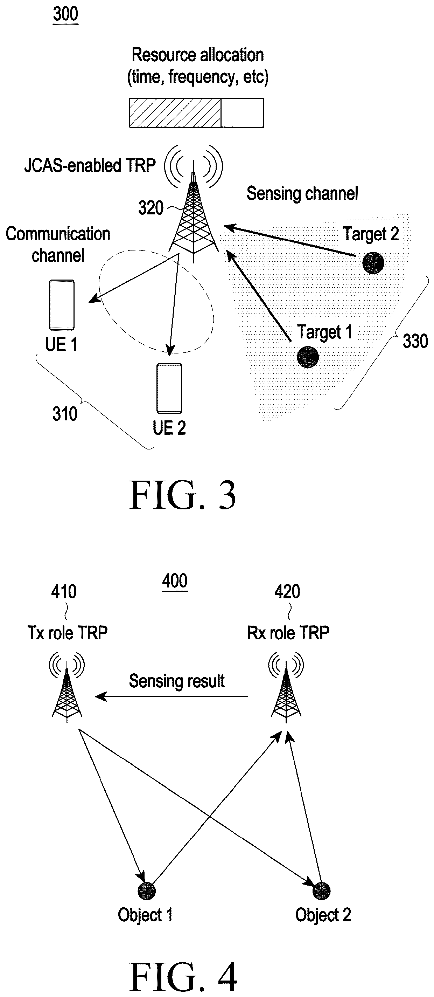

FIG. 3 illustrates an JCAS system according to an embodiment of the disclosure.

The JCAS system 300 of FIG. 3 may not only provide a communication function provided by the communication system 10 of FIG. 1, but may also provide an additional function for providing sensing and an additional function for providing communication and sensing together.

Referring to FIG. 3, the JCAS system 300 may include at least one UE 310 (e.g., UE1, UE2, etc.), at least one base station/TRP 320, and/or at least one target 330 (e.g., target 1, target 2, etc.).

The UE 310 may be an electronic device supporting a communication function and/or a sensing function. As an embodiment, the UE 310 may include a UE, an MS, a wireless transmit/receive unit, a cellular phone, a smartphone, an MTC device, a computer, a wireless sensor, a vehicle, an IoT device, and/or an electronic device capable of performing other communication functions and/or sensing functions.

The UE 310 according to an embodiment may communicate with another UE or may communicate with a network (JCAS network) of the JCAS system 300 using a communication function. For example, like, e.g., the UE 11 of FIG. 1, the UE 310 may communicate with another UE or may communicate with one or more network nodes (e.g., the base station 320) in the radio access network of the JCAS system 300. For example, the UE 310 may receive a communication signal (DL signal) from the base station 320 through a communication channel and may transmit the communication signal (UL signal) to the base station 320.

The UE 310 according to an embodiment may further support a sensing function. For example, the UE 310 may receive a sensing signal from the base station 320 through a sensing channel and may perform a sensing operation based on the sensing signal. For example, the UE 310 may transmit the sensing signal through the sensing channel. For example, the UE 310 may receive a reflection of the sensing signal transmitted from the base station 320 or another UE through the sensing channel, and may perform a sensing operation based on the received reflection (reflection signal).

According to an embodiment, the UE 310 may be a device registered in the JCAS network.

The base station 320 may be a network node that integrates and supports communication and sensing functions. The base station 320 that integrates and supports such communication and sensing functions may be referred to as a JCAS-enabled BS, a JSAC-enabled BS, or an ISAC-enabled BS. In an embodiment, the base station 320 is an entity performing resource allocation for communication and sensing of the UE 310 and may be a wireless base station, a NodeB, an eNB, a radio access unit, a network node, a network device, a node on a network, a base station controller, a TP, an AP, a relay station, a BBU, an RRU, an RRH, a CU, a DU, or a TRP.

According to an embodiment, the base station 320 may communicate with the UE 310 or may communicate with a core network or another network of the JCAS system 300 using a communication function. For example, the base station 320 may transmit a communication signal (DL signal) to the UE 310 through a communication channel and may receive the communication signal (UL signal) from the UE 310. The core network of the JCAS system 300 may include at least one network node for supporting a communication function (service) and a sensing function (service). According to an embodiment, the core network of the JCAS system 300 may be the 5G core network 5GC. As an embodiment, the 5GC may include an AMF, an SMF, a UPF, a PCF, a UDM, a UDR, an NSSF, and/or an NSACF, and the description of each NF may refer to the description of FIG. 1. According to an embodiment, the core network of the JCAS system 300 may be a core network (e.g., a 6G core network, a 4G (LTE) core network, etc.) other than 5GC. In this case, the corresponding core network may include a network function (node) that performs the function identical or similar to those of the network functions (nodes) of the 5GC described above.

The base station 320 according to an embodiment may support a sensing function. For example, the base station 320 may transmit information (e.g., resource allocation information (e.g., time resource allocation information and/or frequency resource allocation information) of the sensing signal) required to perform sensing. For example, the base station 320 may transmit a sensing signal through a sensing channel. For example, the base station 320 may receive a reflection of the sensing signal transmitted from itself, another base station, or the UE 310 through a sensing channel, and may perform a sensing operation based on the received reflection (reflection signal).

The target 330 is an entity to be sensed and may be a UE (e.g., the UE 11 of FIG. 1 or the UE 310 of FIG. 3) having a communication function or an object (e.g., a person, a thing, a building, a vehicle, etc.) not having a communication function. The base station 320 (or the UE 310) may transmit a sensing signal to the target 330 through a sensing channel. The base station 320 (or the UE 310) may receive a reflection (reflection signal) reflected from the target 330 and may perform a sensing operation based on the reflection signal. In this case, the reflection signal may be a reflection of a sensing signal transmitted by itself or a reflection of a sensing signal transmitted by another device (e.g., another base station or another UE).

According to an embodiment, sensing may be performed by, e.g., an individual device such as a single base station 320 or a single UE 310 (monostatic case). According to an embodiment, sensing may be performed jointly by a plurality of devices, e.g., a base station pair, a UE pair, or a UE/base station pair (bistatic case). According to an embodiment, sensing may be performed by an individual device and/or a combination of a plurality of devices jointly performing sensing (multistatic case).

According to an embodiment, the sensing signal (reflection signal) reflected from the target 330 may be used to generate sensing data for the target 330.

The sensing data may include information (sensing information) that may be derived from the reflection signal. According to an embodiment, the sensing information may include information that may be measured from a signal strength, a delay, a timing, an angle of arrival (AoA), a time of flight (ToF), and/or other reflection signals.

Further, the sensing data may further include a description of the sensing data, information for identifying a purpose of sensing, information for identifying a source of sensing, and/or information (e.g., target identification information, target location information, etc.) on a target associated with the sensing data.

According to an embodiment, sensing data (or sensing information) may be used to generate a sensing result for the target. According to an embodiment, the sensing result may include information about a distance, a location, and/or a velocity (doppler) with respect to the target.

Table 2 shows an example of an element and a formula for determining a distance and a velocity through sensing.

[Table 2]

| Metric | Category | Determined by | Formula |
|--------|----------|---------------|---------|
| Range | Maximum | FFT size | $R_{max} = R_{res} \cdot N_{FFT}$ |
| | Resolution | Bandwidth | $R_{res} = c/(2 \cdot BW)$ |
| Doppler | Maximum | Interval between adjacent OFDM symbol | $v_{max} = \lambda/4T_{sens}^{sym}$ |
| | Resolution | Accumulated duration of OFDM symbols for Doppler processing | $v_{res} = \lambda/2T_{sens}^{accum}$ |

Referring to Table 2, a resolution (Rres) of a range that may be measured through a sensing operation may be determined based on a bandwidth (BW). The maximum range (max range) of the range that may be measured through the sensing operation may be determined based on the resolution (Rres) and/or the FFT size ($N_{FFT}$). Referring to Equation 2 of Table 2, as the bandwidth BW increases, the maximum range/range resolution may be enhanced. Meanwhile, sensing processing requires a continuous frequency/bandwidth due to its characteristics. Accordingly, the maximum continuous frequency/bandwidth available in the base station 320 needs to be used for sensing.

Referring to Table 2, the maximum value of the velocity (doppler) that may be measured through a sensing operation may be determined based on the interval ( $T_{sens}^{sym}$ ) between adjacent OFDM symbols allocated for sensing. For example, as the interval ( $T_{sens}^{sym}$ ) decreases, the maximum velocity (maximum doppler) may be enhanced. The resolution of the velocity that may be measured through the sensing operation may be determined based on the duration ( $T_{sens}^{accum}$ ) of the accumulated OFDM symbols for doppler processing. Referring to the equation in Table 2, as the duration ( $T_{sens}^{accum}$ ) increases, the velocity resolution (doppler resolution) may be enhanced. Therefore, considering the doppler requirements, an appropriate sensing signal transmission period needs to be set. As an embodiment, the duration ( $T_{sens}^{accum}$ ) may be associated with the number of symbols for doppler processing.

According to an embodiment, the processing chain (e.g., PHY processing chain) for communication (communication signal) may be the same as, or different from, the processing chain for sensing (sensing signal). For example, the same modulation parameter, coding parameter, and/or waveform parameter may be used for communication and sensing. For example, different modulation parameters, coding parameters and/or waveform parameters may be used for communication and sensing.

According to an embodiment, the RAT for communication may be the same as, or different from, the RAT for sensing.

According to an embodiment, the same carrier (frequency carrier) or different carriers may be used for communication and sensing.

According to an embodiment, different signal formats (structures) may be used for communication and sensing. For example, the sensing signal structure may be different from the communication signal structure.

According to an embodiment, separate PHY channels or a common PHY channel may be used for communication and sensing. For example, separate PHY control channels (e.g., PDCCH and PUCCH) and separate PHY data channels (e.g., PDSCH and PUSCH) may be used for communication and sensing, respectively. For example, a common PHY control channel (e.g., PDCCH or PUCCH) may be used for communication and sensing. When a common PHY control channel is used for communication and sensing, the PHY data channel (e.g., PDSCH or PUSCH) may be used separately or commonly used for communication and sensing.

FIG. 4 illustrates a bistatic sensing structure of a JCAS system according to an embodiment of the disclosure.

The sensing structure of the JCAS system may be classified into the following sensing structures according to geometry.

The monostatic sensing structure corresponds to a sensing structure in which the transmission function and the reception function for sensing are disposed in the same device (or location). In a monostatic sensing structure according to an embodiment, a transmitter transmitting a sensing signal and a receiver receiving the sensing signal may be included in the same device (e.g., a base station). In the case of a monostatic sensing structure according to an embodiment, one device may transmit a sensing signal, receive a sensing signal reflected from a target, and perform a sensing operation based on the same. In the case of such a monostatic sensing structure, the transmitted sensing signal may act as self-interference. Thus, a method for canceling self-interference needs to be considered.

The bistatic sensing structure corresponds to a sensing structure in which a transmission function and a reception function for sensing are disposed in different devices (or locations). In the bistatic sensing structure according to an embodiment, a transmitter transmitting a sensing signal and a receiver receiving the sensing signal may be included in different devices (e.g., a base station or a DU). In the case of a bistatic sensing structure according to an embodiment, a first device may transmit a sensing signal, and a second device different from the first device may receive the sensing signal reflected from the target, and the first device and/or the second device may perform a sensing operation based on the same. In the case of such a bistatic sensing structure, it is necessary to consider a method for synchronization between two devices that respectively perform the transmission/reception function of sensing signals. Hereinafter, various embodiments of the disclosure are described based on two devices being synchronized with each other. In the disclosure, in the bistatic sensing structure, a device that performs a role of transmitting a sensing signal is referred to as a transmission (Tx) role device or a transmission role TRP, and a device that receives a sensing signal may be referred to as a reception (Rx) role device or a reception role TRP. In the disclosure, a sensing mode following the bistatic sensing structure may be referred to as a bistatic sensing mode.

Referring to FIG. 4, the JCAS system 400 using a bistatic sensing structure/mode may include a transmission role TRP 410 and a reception role TRP 420.

The JCAS system 400 according to an embodiment is an example of the JCAS system 300 of FIG. 3, supports all or some of functions of the JCAS system 300, and may further support additional functions for a bistatic sensing mode.

According to an embodiment, the transmission role TRP 410 and the reception role TRP 420 of the JCAS system 400 fully or partially support functions supported by the TRP/base station 320 of the JCAS system 300 of FIG. 3, and may further support additional functions for the bistatic sensing mode.

In the bistatic sensing structure, the transmission role TRP 410 may transmit a sensing signal. The reception role TRP 420 may receive a sensing signal reflected from a target (e.g., objects 1 and 2), and may obtain a sensing result and/or sensing data based on the received sensing signal. The reception role TRP 420 may transmit a sensing result and/or sensing data to the transmission role TRP 410.

According to an embodiment, the transmission role TRP 410 and the reception role TRP 420 may be base station-level devices (e.g., gNB-level). In this case, a base station (transmission role base station (e.g., Tx role gNB)) corresponding to the transmission role TRP 410 and a base station (reception role base station (e.g., Rx role gNB)) corresponding to the reception role TRP 420 may be different base stations.

According to an embodiment, the transmission role TRP 410 and the reception role TRP 420 may be lower-level (e.g., DU-level) devices of the base station. In this case, a DU (transmission role DU) corresponding to the transmission role TRP 410 and a DU (reception role DU) corresponding to the reception role TRP 420 may be DUs belonging to the same base station. For example, the transmission role DU and the reception role DU may be separate DUs (e.g., separate DUs present at different locations) controlled/managed by one CU.

As such, in the case of the bistatic sensing structure/mode, individual sensing cases may be distinguished according to the type of the TRP (e.g., base station-level (e.g., gNB-level) TRP or DU-level TRP).

Hereinafter, various embodiments for the bistatic sensing structure/mode are described with reference to each figure. For example, in the bistatic sensing structure/mode, a method for setting roles of the transmission role TRP and reception role TRP for sensing is described. Further, a method for generating sensing configuration information for bistatic sensing and notifying the same to TRP or UE is described. Further, a method for the reception role TRP to transfer sensing results and/or sensing data to the transmission role TRP is described. Further, operations of the UE in the bistatic sensing structure/mode are described.

[Sensing procedure]

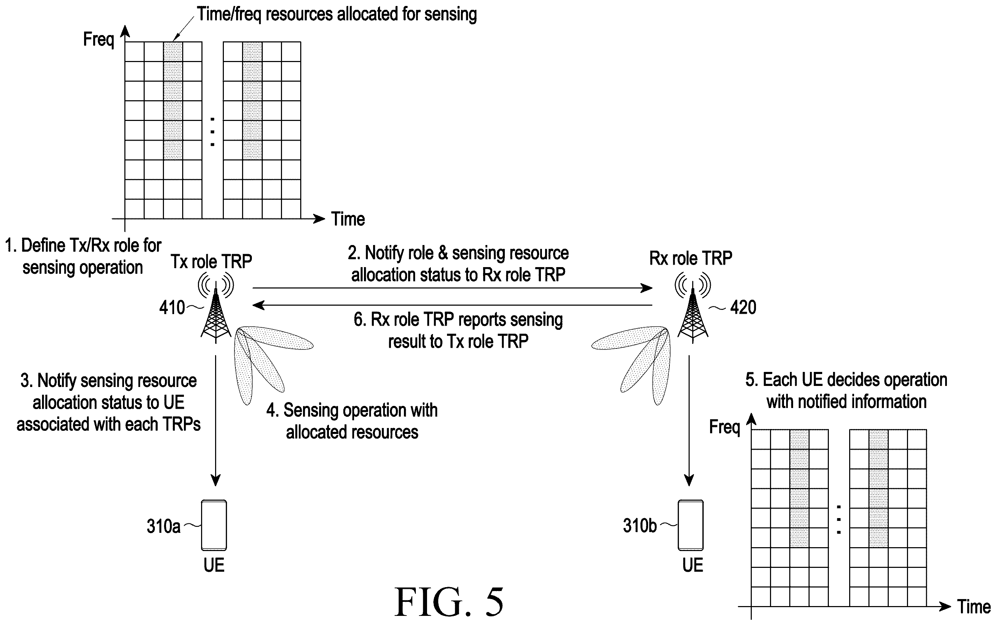

FIG. 5 illustrates a sensing procedure in a JCAS system using a bistatic sensing structure according to an embodiment of the disclosure.

The sensing procedure of FIG. 5 may be an example of a sensing procedure (bistatic sensing procedure) in a JCAS system using the bistatic sensing structure.

In the case of the bistatic sensing procedure, transmitting/reception role TRPs for sensing need to be configured.

Further, in the case of the bistatic sensing procedure, similar to the monostatic sensing procedure, in order to perform sensing together with communication, the resources for sensing are allocated, and information about the allocated sensing resources needs to be notified to the UE 310 (TRP-UE notification). In this case, unlike general communication systems (e.g., the communication system 10 of FIG. 1), the UE 310 needs to perform operations different from existing communication operations in the notified sensing resources for sensing (e.g., resource areas or intervals).

Further, in the case of the bistatic sensing procedure, information about configured transmitting/reception role TRPs and information about allocated sensing resources need to be notified to the transmission role TRP and/or reception role TRP (inter-TRP notification or CU-TRP notification).

Further, in the case of the bistatic sensing procedure, sensing results need to be notified from reception role TRP 420 to the transmission role TRP 410 (inter-TRP notification).

Further, in the case of the bistatic sensing procedure, notification formats for TRP-UE notification, inter-TRP notification, and/or CU-TRP notification need to be defined.

Hereinafter, an exemplary sensing procedure in a JCAS system is described with reference to FIG. 5.

Referring to FIG. 5, in operation 1, transmission/reception roles (e.g., transmission/reception TRP roles) for sensing (or sensing operation) may be configured.

According to an embodiment, when the type of the TRP for bistatic sensing is a base station level TRP type (base station level TRP type), one base station may configure itself as the transmission role TRP 410 and configure at least one other base station as the reception role TRP 420.

According to an embodiment, when the type of the TRP for bistatic sensing is a base station lower level (e.g., DU-level) TRP type (DU level TRP type), the CU may configure at least one DU belonging to the CU as the transmission role TRP 410 and configure at least one other DU belonging to the CU as the reception role TRP 420.

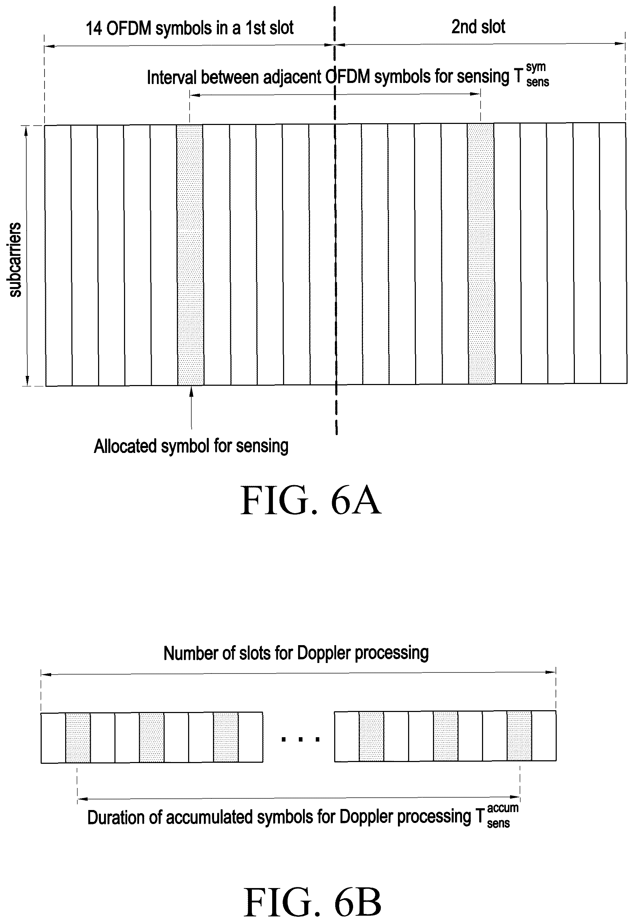

Further, resource allocation for sensing (e.g., time/frequency resource allocation) may be performed. According to an embodiment, in the case of base station level TRP type, the transmission role TRP 410 may allocate resources for sensing. According to an embodiment, in the case of DU level TRP type, the CU may allocate resources for sensing. An example of allocation of time and frequency resources for sensing may be as illustrated in FIGS. 6A and 6B. According to an embodiment, the resources for sensing may not overlap resources for communication.

In operation 2, information about transmission/reception roles for sensing (role information) and information about resource allocation for sensing (sensing resource allocation information) may be transferred to the TRP.

According to an embodiment, in the case of base station level TRP type, the transmission role TRP 410 may transfer role information and sensing resource allocation information to the reception role TRP 420.

According to an embodiment, in the case of DU level TRP type, the CU may transfer role information and sensing resource allocation information to the transmission role TRP 410 and reception role TRP 420.

As such, according to the type of the TRP for bistatic sensing, the entity for configuring the transmission role TRP/reception role TRP, configuring sensing resource allocation (or sensing configuration information), and notifying the same to the TRP may be different as the transmission role TRP/base station, or CU.

In operation 3, the transmission role TRP 410 and reception role TRP 420 may transmit sensing resource allocation information to at least one UE (e.g., the UE 310 of FIG. 3) associated with each of them.

For example, the transmission role TRP 410 may transmit sensing configuration information including sensing resource allocation information to at least one first UE 310a connected to the transmission role TRP 410, and the reception role TRP 420 may transmit sensing configuration information including sensing resource allocation information to at least one second UE 310b connected to the reception role TRP 420. The first UE 310a and the second UE 310b may perform all or some of functions supported by the UE 300 of FIG. 3. In the disclosure, the first UE 310a and the second UE 310b may be referred to as the UE 310.

As an embodiment, the sensing resource allocation information may include information about time and frequency resources for sensing (or sensing signal) allocated in operation 1. Accordingly, the UE 310 may be notified of a current resource allocation status for the sensing signal. In the disclosure, the sensing resource allocation information may be referred to as sensing resource allocation status information.

In operation 4, the transmission role TRP 410 and the reception role TRP 420 may perform a sensing operation using resources (e.g., time and frequency resources) allocated for sensing.

According to an embodiment, the transmission role TRP 410 may transmit a sensing signal using the time and frequency resources allocated for sensing. As an embodiment, the transmission role TRP 410 may transmit a sensing signal through at least one beam.

According to an embodiment, the reception role TRP 420 may receive a sensing signal (reflection signal) reflected from a target (e.g., the UE 310, the first UE 310a, or the second UE 310b of FIG. 3, or the target 330 of FIG. 3) and obtain sensing data and/or a sensing result based on the reflection signal. According to an embodiment, the reception role TRP 420 may receive a sensing signal through at least one beam.

In operation 5, the first UE 310a and the second UE 310b may determine an operation to be performed using the received/notified information (e.g., sensing resource allocation information, sensing configuration information, etc.). For example, the first UE 310a and the second UE 310b may identify time and frequency resources allocated for sensing based on sensing resource allocation information and perform operations (e.g., communication operations and/or sensing operations) based on the identified time and frequency resources.

According to an embodiment, the first UE 310a and the second UE 310b may ignore the time and frequency resources (or signals received through the corresponding resources) allocated for sensing.

According to an embodiment, the first UE 310a and the second UE 310b may perform a communication operation using time and frequency resources other than the time and frequency resources allocated for sensing. For example, the first UE 310a and the second UE 310b may receive communication signals (DL signals) using time and frequency resources allocated for DL communication rather than time and frequency resources allocated for sensing. For example, the first UE 310a and the second UE 310b may transmit communication signals (UL signals) using time and frequency resources allocated for UL communication rather than time and frequency resources allocated for sensing. In an embodiment, information about the time and frequency resources allocated for communication may be transferred from the transmission role TRP 410 and the reception role TRP 420 to the first UE 310a and the second UE 310b through communication configuration information (e.g., PDCCH/downlink control information (DCI)).

According to an embodiment, when the first UE 310a and the second UE 310b support a sensing function, the first UE 310a and the second UE 310b may receive a sensing signal using the time and frequency resources allocated for sensing and perform a sensing operation based on the received sensing signal. The first UE 310a and the second UE 310b may perform a sensing operation to obtain sensing data and/or a sensing result.

In operation 6, the reception role TRP 420 may transfer a sensing result and/or sensing data to the transmission role TRP 410.

Meanwhile, according to an embodiment, some of the above-described operations 1 to 6 may be omitted, and/or additional operations may be further performed. Further, the operations may be performed in a different order from the illustrated/described order, or multiple operations may be performed simultaneously.

Meanwhile, in FIG. 5, for convenience of description, a procedure between the TRP and one UE has been described as an example, but embodiments are not limited thereto. For example, a plurality of UEs may be connected to the TRP base station. In this case, each UE may perform the same procedure as described above between the TRP and the UE, with the corresponding TRP.

[Allocation of sensing resources]

FIGS. 6A and 6B illustrate an example of resource allocation for sensing according to an embodiment of the disclosure.

In the embodiments of FIGS. 6A and 6B, for convenience of description, it is assumed that the time-frequency domain structure follows the time-frequency domain structure of FIG. 2A, and the frame, subframe, and slot structure follow the frame, subframe, and slot structure of FIG. 2B, but the embodiments are not limited thereto.

As an embodiment, in the time domain, at least one OFDM symbol may be allocated for sensing. For example, as illustrated in FIG. 6A, a first OFDM symbol (e.g., a sixth OFDM symbol (symbol index = 5) in a first slot (e.g., a first slot (1st slot) of a frame or a period) and a second OFDM symbol (e.g., a sixth OFDM symbol (symbol index = 5) in a second slot (e.g., a second slot (2nd slot) of the frame or period) following the first slot may be allocated for sensing.

As an embodiment, in the time domain, symbols (sensing symbols) for sensing may be allocated at preset intervals. For this purpose, the interval ( $T_{sens}^{sym}$ ) between adjacent OFDM symbols for sensing may be set by the base station 320 (or transmission role TRP 410 or CU). Thus, OFDM symbols for sensing may be allocated in the time domain at the same interval.

As an embodiment, in the time domain, OFDM symbols and/or slots corresponding to a preset number (or duration) for doppler processing may be allocated. For this purpose, the number of slots for doppler processing or the duration ( $T_{sens}^{accum}$ ) of the accumulated symbols (OFDM symbols) for doppler processing may be set by the base station 320 (or transmission role TRP 410 or CU). Thus, as shown in FIG. 6B, a preset number of OFDM symbols in the time domain may be allocated for sensing. As an embodiment, the duration ( $T_{sens}^{accum}$ ) may be associated with the number of symbols for doppler processing.

As an embodiment, the base station 320 (or transmission role TRP 410 or CU) may set the interval ( $T_{sens}^{sym}$ ), the number of slots and/or duration ( $T_{sens}^{accum}$ ) for doppler processing. For example, the base station 320 (or transmission role TRP 410 or CU) may allocate OFDM symbols for sensing in the time domain, based on the interval ( $T_{sens}^{sym}$ ), the number of slots and/or the duration ( $T_{sens}^{accum}$ ) for doppler processing. The base station 320 (or transmission role TRP 410 or CU) may transmit information (sensing time resource information) about the time resource allocated for sensing to the UE 310. As an embodiment, the sensing time resource information may include at least one of the interval ( $T_{sens}^{sym}$ ), the number of slots for doppler processing, the number of symbols for doppler processing, or duration ( $T_{sens}^{accum}$ ). Thus, the UE 310 may be notified of the OFDM symbol allocation status for sensing. The UE 310 may perform an operation based on the notified information. Meanwhile, the duration ( $T_{sens}^{accum}$ ) is information that is sufficient for the receiving device (e.g., base station 320) of the sensing signal to know, and the UE 310 may not be notified of the duration.

As an embodiment, in the frequency domain, all or some of the subcarriers of the OFDM symbol allocated for sensing may be allocated for sensing. For example, as shown in FIG. 6A, all of the subcarriers associated with the OFDM symbol allocated for sensing may be allocated for sensing. For example, as shown in FIG. 5, some of the subcarriers associated with the OFDM symbol allocated for sensing may be allocated for sensing. In this case, the allocated subcarriers may be contiguous subcarriers.

[Block diagram of JCAS-enabled device]

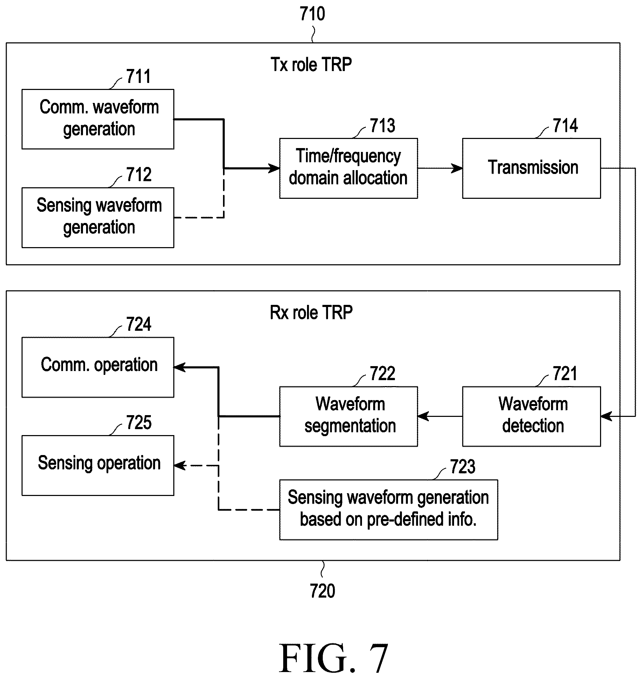

FIG. 7 is a block diagram illustrating a transmission JCAS-enabled device and a reception JCAS-enabled device using different waveforms for sensing and communication according to an embodiment of the disclosure.

In the embodiment of FIG. 7, the transmission JCAS supporting device 710 and the reception JCAS supporting device 720 may use different waveforms for sensing and communication.

The transmission JCAS supporting device 710 according to an embodiment may be a device corresponding to a transmission role TRP (e.g., the transmission role TRP 410) or including a transmission role TRP.

The reception JCAS supporting device 720 according to an embodiment may be a device corresponding to a reception role TRP (e.g., the reception role TRP 420) or including a reception role TRP.

Referring to FIG. 7, the transmission JCAS supporting device 710 (or transmission role TRP) may include a communication waveform generation unit 711, a sensing waveform generation unit 712, a time/frequency domain allocation unit 713, and/or a transmission unit 714.

The communication waveform generation unit 711 may generate a waveform (communication waveform) for communication (communication signal). The communication waveform according to an embodiment may be an OFDM-based waveform.

The sensing waveform generation unit 712 may generate a waveform (sensing waveform) for sensing (sensing signal). The sensing waveform according to an embodiment may be a waveform based on a frequency modulated continuous wave (FMCW).

The time/frequency domain allocation unit 713 may allocate time/frequency resources for the communication waveform and the sensing waveform. The time/frequency domain allocation unit 613 may allocate a time/frequency resource for the communication waveform and a time/frequency resource for the sensing waveform, respectively.

The transmission unit 714 may transmit the communication waveform and the sensing waveform using the allocated time/frequency resources.

The reception JCAS supporting device 720 (or reception role TRP) may include a waveform detection unit 721, a waveform segmentation unit 722, a sensing waveform generation unit 723, a communication operation unit 724, and/or a sensing operation unit 725.

The waveform detection unit 721 may receive a signal and detect a communication waveform and a sensing waveform from the signal. The sensing waveform may be a waveform of a sensing signal reflected from a target.

The waveform segmentation unit 722 may segment the detected communication waveform and sensing waveform and transfer data of the communication waveform to the communication operation unit 724 and transfer data of the sensing waveform to the sensing operation unit 725.

The sensing waveform generation unit 723 may generate a waveform (sensing waveform) for sensing (sensing signal) using predefined information. In an embodiment, the preset information may be identical to the information used to generate the sensing waveform in the sensing waveform generation unit 712. For example, the sensing waveform generation unit 723 may generate the sensing waveform using the same waveform parameter as that of the sensing waveform generation unit 712 and transfer the data of the generated sensing waveform to the sensing operation unit 725.

The communication operation unit 724 may perform a communication operation using data of the communication waveform.

The sensing operation unit 725 may perform a sensing operation using data of the sensing waveform. For example, the sensing operation unit 725 may obtain correlation data between the first sensing waveform and the second sensing waveform using the data of the sensing waveform (first sensing waveform) transferred from the sensing waveform generation unit 723 and the data of the sensing waveform (second sensing waveform) transferred from the waveform segmentation unit 722, and may obtain sensing data for the target based on the correlation data.

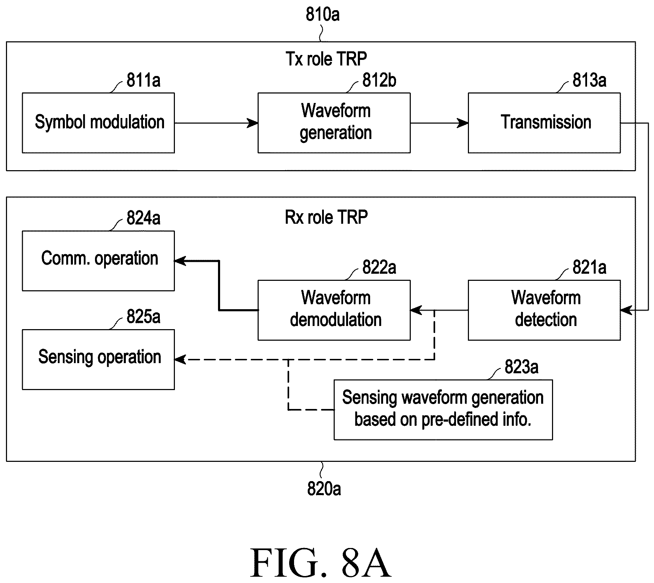

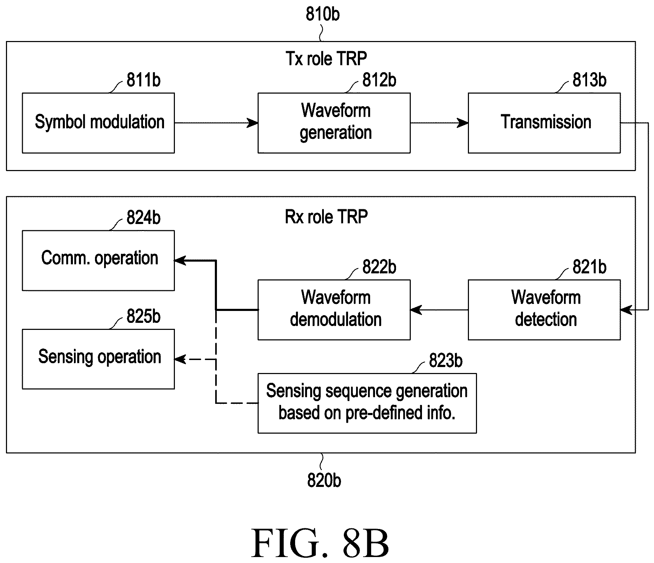

FIGS. 8A and 8B are block diagrams illustrating a transmission JCAS-enabled device and a reception JCAS-enabled device using the same waveform for sensing and communication according to an embodiment of the disclosure.

Unlike the embodiment of FIG. 7, in the embodiments of FIGS. 8A and 8B, the transmission JCAS supporting device 810a, 810b and the reception JCAS supporting device 820a, 820b may use the same waveform for sensing and communication.

According to an embodiment, the transmission JCAS supporting device 810a, 810b may correspond to a transmission role TRP (e.g., the transmission role TRP 410) or may be a device including a transmission role TRP.

According to an embodiment, the reception JCAS supporting device 820a, 820b may correspond to a reception role TRP (e.g., the reception role TRP 420) or may be a device including a reception role TRP.

In the embodiment of FIG. 8A, baseband waveform-based correlation (waveform-based correlation) may be used for sensing operation. In contrast, in the embodiment of FIG. 8B, demodulated symbol-based correlation (symbol-based correlation) may be used for sensing operation.

Referring to FIGS. 8A and 8B, the transmission JCAS supporting device 810a, 810b (or transmission role TRP) may include a symbol modulation unit 811a, 811b, waveform generation unit 812a, 812b, and/or a transmission unit 813a, 813b.

Receiving JCAS supporting device 820a (or reception role TRP) of FIG. 8A may include a waveform detection unit 821a, a waveform demodulation unit 822a, a sensing waveform generation unit 823a, a communication operation unit 824a, and/or a sensing operation unit 825a. The reception JCAS supporting device 820b (or reception role TRP) of FIG. 8B may include a waveform detection unit 821b, a waveform demodulation unit 822b, a sensing sequence generation unit 823b, a communication operation unit 824b, and/or a sensing operation unit 825b.

The symbol modulation unit 811a, 811b may perform modulation on data for communication and sensing to obtain symbol data.

The waveform generation unit 812a, 812b may generate waveforms for communication/reception using the symbol data. The waveform according to an embodiment may be an OFDM-based waveform.

The transmission unit 813a, 813b may transmit the generated waveforms.

The waveform detection unit 821a, 821b may receive signals and detect waveforms from the signals. The detected data of the waveform may include data of the sensing signal reflected from the target.

The waveform detection unit 821a of FIG. 8A may transfer data of detected waveforms to the waveform demodulation unit 822a and sensing operation unit 825a.

The waveform detection unit 821b of FIG. 8B may transfer data of detected waveforms to the waveform demodulation unit 822b.

The waveform demodulation unit 822a, 822b may demodulate waveform data to obtain symbol data.

The waveform demodulation unit 822a of FIG. 8A may transfer symbol data to the communication operation unit 823a.

The waveform demodulation unit 822b of FIG. 8B may transfer symbol data to the communication operation unit 824b and sensing operation unit 825b.

The sensing waveform generation unit 823a may generate waveforms for sensing (sensing waveforms) using predefined information. As an embodiment, the preset information may be the same as information used to generate waveforms in the waveform generation unit 812a. For example, the sensing waveform generation unit 823a may generate sensing waveforms using the same waveform parameters as sensing waveform generation unit 812a. The sensing waveform generation unit 823a may transfer data of generated sensing waveforms to the sensing operation unit 825a.

The sensing sequence generation unit 823b may generate sensing sequences using predefined information. The generated sensing sequence may correspond to symbol data generated in the symbol modulation unit 811a. As an embodiment, the preset information may be the same as information used to generate symbol data in the symbol modulation unit 811a. For example, the sensing sequence generation unit 823b may generate sensing sequences using the same parameters as the symbol modulation unit 811a. The sensing sequence generation unit 823b may transfer the generated sensing sequence to the sensing operation unit 825a.

The communication operation unit 824a, 824b may perform a communication operation using the symbol data.

The sensing operation unit 825a, 825b may perform a sensing operation.

According to an embodiment, the sensing operation unit 825a of FIG. 8A may obtain correlation data of the first waveform and second waveform using data of waveform (first waveform) transferred from the waveform detection unit 821a and data of waveform (second waveform) transferred from the sensing waveform generation unit 823a (waveform-based correlation), and obtain sensing data for the target based on the correlation data.

According to an embodiment, the sensing operation unit 825b of FIG. 8B may obtain correlation data using the symbol data transferred from the waveform demodulation unit 822b and symbol data transferred from the sensing sequence generation unit 823b (symbol-based correlation), and obtain sensing data for the target based on the correlation data.

[Sensing configuration information]

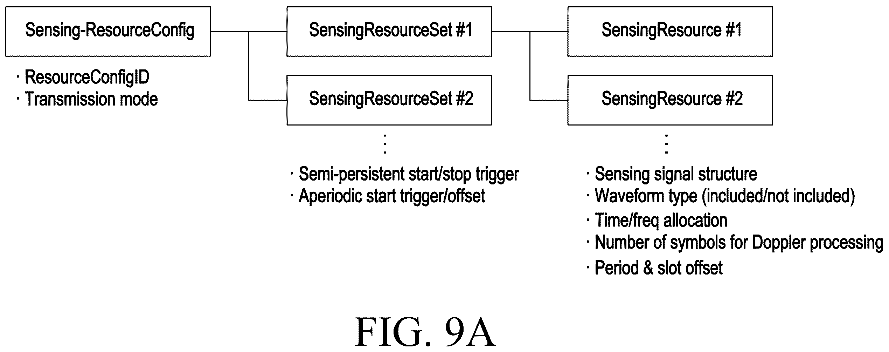

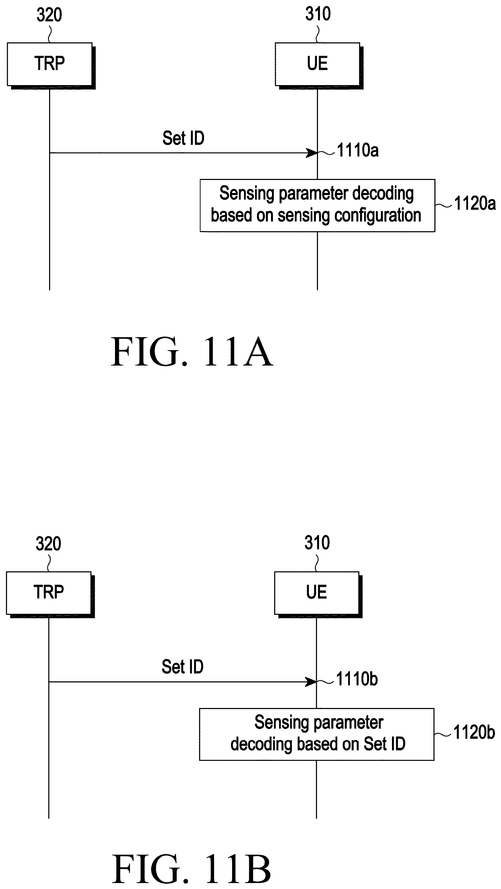

Hereinafter, a configuration of information (sensing configuration information) for a configuration for sensing is described. The parameters included in the sensing configuration information of FIGS. 9A to 9D and FIG. 11A to be described below may be combined, changed/replaced and used as long as they are not contradictory.

FIG. 9A illustrates an example of sensing configuration information according to an embodiment of the disclosure.

In the embodiment of FIG. 9A, the sensing configuration information may have a hierarchical structure.

Referring to FIG. 9A, the sensing configuration information may include at least one sensing resource configuration information (e.g., Sensing-ResourceConfig).

The sensing resource configuration information may include resource configuration ID information (e.g., ResourceConfigID), transmission mode information (e.g., Transmission mode), and/or at least one sensing resource set information (e.g., SensingResourceSet #1, SensingResourceSet #2, etc.).

The resource configuration ID information may indicate the ID of the sensing resource configuration information.

The transmission mode information may indicate a transmission mode of a sensing signal (or a sensing sequence) in a sensing configuration to which the sensing resource configuration information is applied. As an embodiment, the transmission mode may be one of a periodic transmission mode, a semi-persistent transmission mode, and an aperiodic transmission mode. As an embodiment, in the case of the bistatic sensing structure/mode, it may be limited to using only periodic transmission mode, and in this case, the transmission mode information may not be included in the sensing configuration information (or sensing resource configuration information).

As an embodiment, the resource configuration ID information and the transmission mode information may be information of the sensing resource configuration information-level which is a higher level of the sensing resource set information-level, and a separate resource configuration ID (or sensing resource configuration information identified by the resource configuration ID) may be allocated for each transmission mode indicated by the transmission mode information. For example, the resource configuration ID of the sensing resource configuration information for the periodic transmission mode may be different from the resource configuration ID of the sensing resource configuration information for the aperiodic transmission mode. As described above, by configuration the resource configuration ID information and the transmission mode information as the information of the highest level of the sensing resource configuration information, it is possible to configure separate sensing resource set information/sensing resource information for each transmission mode.

The sensing resource set information may include at least one piece of sensing resource information (e.g., SensingResource #1 and SensingResource #2).

The sensing resource set information may further include sensing resource set information-level information that differs according to the transmission mode. For example, when the transmission mode is the semi-persistent transmission mode, the sensing resource set information may include trigger information (semi-persistent start trigger) for starting the semi-persistent transmission mode for the corresponding sensing resource set (e.g., SensingResourceSet #1) and/or trigger information (semi-persistent stop trigger) for stopping the semi-persistent transmission mode. For example, when the transmission mode is the aperiodic transmission mode, the sensing resource set information may include trigger information (aperiodic start trigger) and/or offset information (aperiodic offset) for starting the aperiodic transmission mode for the corresponding sensing resource set (e.g., SensingResourceSet #1). The sensing resource set information level may be a higher level of the sensing resource information-level.

The sensing resource information may include information about a sensing resource according to a sensing requirement or an application requirement. As an embodiment, a plurality of sensing resource information configured for each sensing requirement (or application) may be included in one piece of sensing resource set information. For example, SensingResource #1 configured according to the first sensing requirement (or the first application) and SensingResource #2 configured according to the second sensing requirement (or the second application) may be included in one piece of sensing resource set information (e.g., SensingResourceSet #1). As an embodiment, a plurality of sensing resource set information configured for each sensing requirement (or first application) may be included in one piece of sensing resource configuration information. For example, SensingResourceSet #1 configured according to the first sensing requirement (or the first application) and SensingResourceSet #2 configured according to the second sensing requirement (or the second application) may be included in one piece of sensing resource configuration information.

The sensing resource information according to an embodiment may include information about a sensing signal structure, information about a waveform type, information for measuring a range, and/or information for doppler processing. As an embodiment, the information for measuring the range may include frequency resource allocation information for sensing. As an embodiment, the information for doppler processing may include time resource allocation information for sensing, information about a period for transmitting a sensing signal, information about an offset (e.g., a slot offset) for transmitting a sensing signal, and/or information about the number of symbols required for doppler processing (symbol count information for doppler processing). As an embodiment, when the same waveform is used for sensing and communication, information about the waveform type may not be included in the sensing resource information.

According to an embodiment, the base station 320 (or the transmission role TRP 410 or the reception role TRP 420) may transmit sensing configuration information to the UE 310 through higher layer signaling and/or PHY layer signaling.

For example, base station 320 (or the transmission role TRP 410 or the reception role TRP 420) may transmit the sensing configuration information through a radio resource control (RRC) message which is higher layer signaling. As an embodiment, the RRC message may include the whole or part of the information included in the sensing configuration information.

For example, the base station 320 (or the transmission role TRP 410 or the reception role TRP 420) may transmit the sensing configuration information using system information (e.g., system information block (SIB)) which is higher layer signaling. As an embodiment, the SIB may include part of the information included in the sensing configuration information.

For example, the base station 320 (or the transmission role TRP 410 or the reception role TRP 420) may transmit the sensing configuration information using the MAC control element (CE) which is higher layer signaling. As an embodiment, the MAC CE may include the whole or part of information included in the sensing configuration information.

For example, base station 320 (or the transmission role TRP 410 or the reception role TRP 420) may transmit the sensing configuration information through a DCI which is PHY layer signaling. As an embodiment, the DCI may include the whole or part of the information included in the sensing configuration information.

According to an embodiment, the base station 320 (or transmission role TRP 410 or CU) may transmit the sensing configuration information to the transmission role TRP 410 or the reception role TRP 420 using a preconfigured interface (e.g., an F1 interface or an X2 interface).

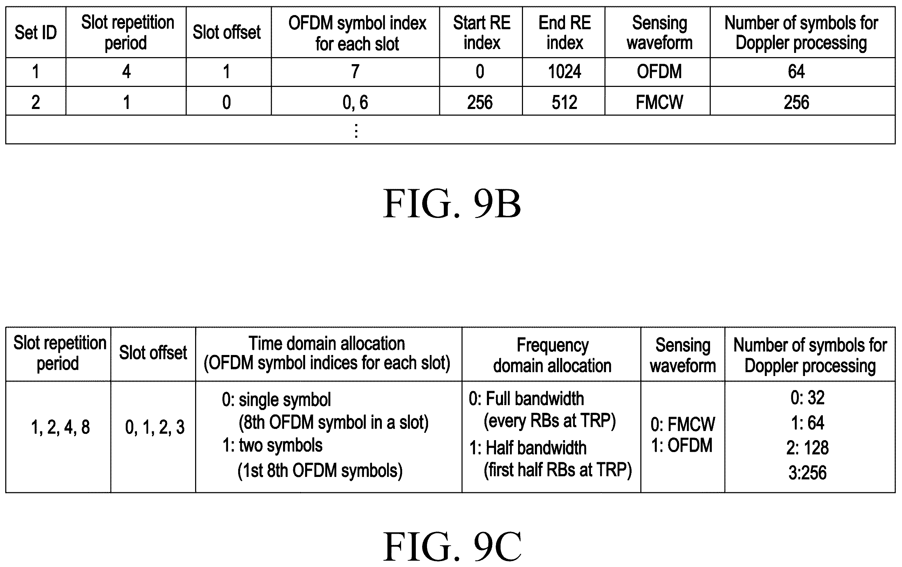

FIG. 9B illustrates an example of sensing configuration information according to an embodiment.

The sensing configuration information of FIG. 9B may be used for the periodic transmission mode.

The sensing configuration information of FIG. 9B may be used for the TRP (e.g., the transmission role TRP 410 or the reception role TRP 420) to transfer the sensing configuration (e.g., a sensing configuration for the bistatic sensing structure/mode) to the UE, but is not limited thereto.

Referring to FIG. 9B, the sensing configuration information may have a form of a predefined table. For example, a configuration table for a sensing parameter set, such as the table of FIG. 9B, may be predefined. In the table, the setting values of the sensing parameters included in the sensing parameter set may be set to differ for each set ID indicated by the set ID information. For example, as illustrated in FIG. 9B, the setting values of the sensing parameters included in the sensing parameter set for the first set ID (set ID = 1) may be different from the setting values of the sensing parameters included in the sensing parameter set for the second set ID (set ID = 2).

As an embodiment, the sensing parameter set may include at least one sensing parameter. For example, as illustrated in FIG. 9B, the sensing parameter set may include a slot repetition period parameter/information, a slot offset parameter/information, an OFDM symbol index parameter/information for each slot, a start RE index parameter/information, an end RE index parameter/information, a sensing waveform parameter/information, and/or a symbol count parameter/information for doppler processing.

The slot repetition period information, the slot offset, and the OFDM symbol index information for each slot may be used for time resource allocation for sensing.

The slot repetition period information may specify a period (slot repetition period) in which the OFDM symbol (sensing symbol) where a sensing sequence (or sensing data) is transmitted is allocated. As an embodiment, the slot repetition period information may indicate the period in which the sensing symbol is allocated as the number of slots. In the disclosure, the slot repetition period information may be referred to as repetition period information and period information.

The slot offset information may designate the offset from the start time of the period designated by the slot repetition period information to the start time of the slot (sensing slot) where the sensing symbol is allocated. As an embodiment, the slot offset information may designate an offset on a per-slot basis. In the disclosure, the slot offset information may be referred to as offset information.

The OFDM symbol index information for each slot may specify the index of the OFDM symbol corresponding to the sensing symbol in each slot where the sensing symbol is allocated. When a plurality of sensing symbols are allocated in the corresponding slot, the OFDM symbol index information for each slot may designate an OFDM symbol index for each of the plurality of sensing symbols. In the disclosure, OFDM symbol index information for each slot may be referred to as sensing symbol index information.

The start RE index information and the end RE index information may be used for frequency resource allocation for sensing.

The start RE index information may specify the index of the start RE for continuous frequency allocation. The end RE index information may specify the index of the end RE for continuous frequency allocation. Continuous frequency resources designated by the start RE index information and the end RE index information may be used for sensing.

The sensing waveform information may designate a type of waveform to be used for sensing (or sensing operation). For example, the sensing waveform information may be one-bit information set to either a first value (e.g., 0) indicating that the type of waveform is FMCW-based waveform or a second value (e.g., 1) indicating that the type of waveform is OFDM-based waveform.

The number of symbols for doppler processing may designate the number of accumulated symbols (OFDM symbols) (e.g., 32, 64, 128, 256) required for doppler processing.

As an embodiment, the setting value of parameters included in the sensing parameter set for each value of the set ID in the table of Table 9B may be a fixed value (e.g., a value defined in the standard) or a value shared in advance between devices for sensing. Therefore, the devices for sensing (e.g., base station 320, UE 310, transmission role TRP 410, reception role TRP 420, or CU) may know the setting values (e.g., table values in Table 9B) of parameters included in the sensing parameter set for each value of the set ID in advance. Therefore, the base station 320 (or the transmission role TRP 410 or the reception role TRP 420) may transmit (or broadcast) only the value of the set ID information to be used as sensing configuration information to the UE 310 for sensing resource allocation. Accordingly, signaling overhead may be reduced. In this case, the UE 310 may obtain setting values of parameters included in the sensing parameter set corresponding to the set ID, based on the set ID of the set ID information, and may perform an operation (e.g., the communication operation and/or the sensing operation) based on the setting values.

According to an embodiment, the base station 320 (or the transmission role TRP 410 or the reception role TRP 420) may transmit set ID information (or sensing configuration information including set ID information) to the UE 310 through higher layer signaling (e.g., SIB, RRC message and/or MAC CE) or PHY layer signaling (e.g., DCI). For example, the base station 320 (or the transmission role TRP 410 or the reception role TRP 420) may broadcast the SIB including the set ID information. For example, the base station 320 (or the transmission role TRP 410 or the reception role TRP 420) may transmit an RRC message including set ID information to the UE 310. For example, the base station 320 (or the transmission role TRP 410 or the reception role TRP 420) may transmit a MAC CE including set ID information to the UE 310. For example, the base station 320 (or the transmission role TRP 410 or the reception role TRP 420) may transmit a DCI including set ID information to the UE 310.

According to an embodiment, the base station 320 (or transmission role TRP 410 or CU) may transmit the set ID information to the transmission role TRP 410 or the reception role TRP 420 using a preconfigured interface (e.g., an F1 interface or an X2 interface).

FIG. 9C illustrates an example of sensing configuration information for a periodic transmission mode according to an embodiment.

The sensing configuration information of FIG. 9C may be used for the periodic transmission mode.

The sensing configuration information of FIG. 9C may be used for the TRP (e.g., the transmission role TRP 410 or the reception role TRP 420) to transfer the sensing configuration (e.g., a sensing configuration for the bistatic sensing structure/mode) to the UE, but is not limited thereto.

Referring to FIG. 9C, the sensing configuration information may have a form of a bitmap. For example, the configuration for the sensing parameter set may be configured in the form of a bitmap.

As an embodiment, the sensing parameter set may include at least one sensing parameter. For example, as illustrated in FIG. 9C, the sensing parameter set may include a slot repetition period parameter/information, a slot offset parameter/information, a time domain allocation parameter/information, a frequency domain allocation parameter/information, a sensing waveform parameter/information, and/or a symbol count parameter/information for doppler processing.

The slot repetition period information, the slot offset, and the time domain allocation information may be used for time resource allocation for sensing.

The slot repetition period information may specify a period (slot repetition period) in which the OFDM symbol (sensing symbol) where a sensing sequence (or sensing data) is transmitted is allocated. As an embodiment, the slot repetition period information may indicate the period in which the sensing symbol is allocated as the number of slots. As an embodiment, the slot repetition period information may be set to the two-bit value that specifies the period (e.g., 1, 2, 4, 8) in which the sensing symbol is allocated.

The slot offset information may designate the offset from the start time of the period designated by the slot repetition period information to the start time of the slot where the sensing symbol is allocated. As an embodiment, the slot offset information may designate an offset on a per-slot basis. As an embodiment, the slot offset information may be set to a two-bit value that specifies the slot offset (e.g., 0, 1, 2, 3).

The time domain allocation information may be set to one of predefined values to designate the index of the OFDM symbol corresponding to the sensing symbol in each slot where the sensing symbol is allocated. For example, the time domain allocation information may be one-bit information set to one of a first value (e.g., 0) indicating that one OFDM symbol is allocated as the sensing symbol in the corresponding slot or a second value (e.g., 1) indicating that two OFDM symbols are allocated as the sensing symbol in the corresponding slot.

When the time domain allocation information is set to the first value (e.g., 0) indicating that one OFDM symbol is allocated as the sensing symbol, the value of the OFDM symbol index of the corresponding sensing symbol may be a preset value (e.g., the OFDM symbol index value corresponding to the eighth OFDM symbol).

When the time domain allocation information is set to the second value (e.g., 1) indicating that two OFDM symbols are allocated as the sensing symbol, the values of the OFDM symbol indexes of the corresponding two sensing symbols may be preset values (e.g., the OFDM symbol index value corresponding to the first OFDM symbol and the OFDM symbol index value corresponding to the eighth OFDM symbol).

The frequency domain allocation information may include information for continuous frequency allocation. As an embodiment, the frequency domain allocation information may be one-bit information set to one of the first value (e.g., 0) indicating the full bandwidth (e.g., all RBs (e.g., the total system bandwidth) available/configurable in the base station) or the second value (e.g., 1) indicating the half bandwidth (e.g., the first half RBs (e.g., the first half of the total system bandwidth) of all RBs available/configurable in the base station).

The sensing waveform information may designate a type of waveform to be used for sensing (or sensing operation). For example, the sensing waveform information may be one-bit information set to either a first value (e.g., 0) indicating that the type of waveform is FMCW-based waveform or a second value (e.g., 1) indicating that the type of waveform is OFDM-based waveform.

The number of symbols for doppler processing may designate the number of accumulated symbols (OFDM symbols) (e.g., 32, 64, 128, 256) required for doppler processing. For example, the symbol count information for doppler processing may be two-bit information set to one of a first value (e.g., 0) indicating the number of accumulated symbols required for doppler processing is 32, a second value (e.g., 1) indicating that the number of accumulated symbols required for doppler processing is 64, a third value (e.g., 2) indicating that the number of accumulated symbols required for doppler processing is 128, and a fourth value (e.g., 3) indicating that the number of accumulated symbols required for doppler processing is 256.

As an embodiment, the bitmap of the sensing parameter set may be set to a total of 9 bits. For example, as illustrated in FIG. 9C, among the nine bits, the two least significant bits (LSBs) may be used to set the slot repetition period information, the next two bits may be used to set the slot offset information, the next one bit may be used to set the time domain allocation information, the next one bit may be used to set the frequency domain allocation information, the next one bit may be used to set the sensing waveform information, and the two most significant bits (MSBs) may be used to set the symbol count information for doppler processing. However, this is merely an example of a bitmap of a sensing parameter set, and embodiments are not limited thereto.

For example, it is also possible to use a bitmap in which the parameters (information) of the sensing parameter set are configured in a different order from the order illustrated in FIG. 9C.

For example, some parameters (information) of the sensing parameter set may be omitted, or a bitmap further including additional parameters (information) may be used. In this case, the length of the bitmap may be longer or shorter than 9 bits.

According to an embodiment, the type and order of the parameters (information) included in the sensing parameter set configured in the form of the bitmap, and bitmap length may be fixed values (e.g., values defined in the standards), or may be values previously shared between devices for sensing. Therefore, the base station 320 (or the transmission role TRP 410 or the reception role TRP 420) may transmit only the bitmap (sensing parameter bitmap) of the sensing parameter set to the UE 310 for sensing resource allocation. Accordingly, signaling overhead may be reduced. In this case, the UE 310 may obtain the setting values of the parameters included in the sensing parameter set corresponding to the sensing parameter bitmap, based on the setting values of the sensing parameter bitmap, and may perform an operation (e.g., a communication operation and/or a sensing operation) based thereon.

According to an embodiment, the base station 320 (or the transmission role TRP 410 or the reception role TRP 420) may transmit the sensing parameter bitmap (or sensing configuration information including the sensing parameter bitmap) to the UE 310 through higher layer signaling (e.g., SIB, RRC message and/or MAC CE) or PHY layer signaling (e.g., DCI). For example, the base station 320 (or the transmission role TRP 410 or the reception role TRP 420) may broadcast the SIB including the sensing parameter bitmap. For example, the base station 320 (or the transmission role TRP 410 or the reception role TRP 420) may transmit an RRC message including the sensing parameter bitmap to the UE 310. For example, the base station 320 (or the transmission role TRP 410 or the reception role TRP 420) may transmit a MAC CE including the sensing parameter bitmap to the UE 310. For example, the base station 320 may transmit the DCI including the sensing parameter bitmap to the UE 310.

According to an embodiment, the base station 320 (or transmission role TRP 410 or CU) may transmit the sensing parameter bitmap to the transmission role TRP 410 or the reception role TRP 420 using a preconfigured interface (e.g., an F1 interface or an X2 interface).

Meanwhile, the sensing parameters in the sensing parameter set of FIG. 9B and the sensing parameters in the sensing parameter set of FIG. 9C may be combined or replaced with each other.

For example, some or all of the parameters in the sensing parameter set of FIG. 9C may be used to configure the configuration table of FIG. 9B, together with, or instead of, some or all of the parameters in the sensing parameter set of FIG. 9B. For example, some or all of the parameters in the sensing parameter set of FIG. 9B may be used to configure the sensing parameter bitmap of FIG. 9C, together with, or instead of, some or all of the parameters in the sensing parameter set of FIG. 9C.

For example, the sensing symbol index information (OFDM symbol index for each slot) of FIG. 9B may be replaced with the time domain allocation information of FIG. 9C and used, or vice versa. For example, the start RE index information and the end RE index information of FIG. 9B may be replaced with the frequency domain allocation information of FIG. 9C and used, or vice versa.

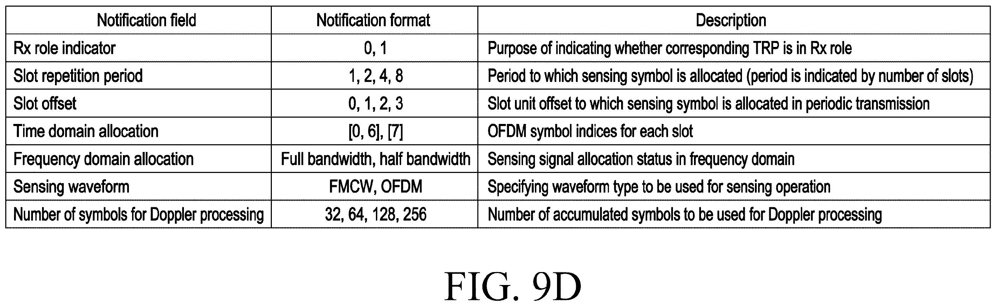

FIG. 9D illustrates an example of sensing configuration information according to an embodiment.

The sensing configuration information of FIG. 9D may be an example of sensing configuration information used for the bistatic sensing structure.

The sensing configuration information of FIG. 9D may be used for the transmission role TRP 410 to transfer the sensing configuration to the reception role TRP 420 (base station level TRP type). Alternatively, the sensing configuration information of FIG. 9D may be used for the CU to transfer the sensing configuration to the transmission role TRP 410 and reception role TRP 420 (DU level TRP type).

Referring to FIG. 9D, the sensing configuration information may include at least one sensing parameter field/information. For example, the sensing configuration information may include reception role indicator information, slot repetition period information, slot offset information, time domain allocation information, frequency domain allocation information, sensing waveform information, and/or information about the number of symbols for Doppler processing. As an embodiment, the sensing configuration information may further include transmission role indicator information.

The reception role indicator information may indicate whether the corresponding TRP is a TRP performing reception role (reception role TRP). The reception role information may be used to indicate the role of the TRP.

The transmission role indicator information may indicate whether the TRP is a TRP performing a transmission role (transmission role TRP). The transmission role information may be used to indicate the role of the TRP.

According to embodiments, whether the corresponding TRP is a transmission role TRP or reception role TRP may be indicated by one role indicator information. For example, the role indicator information may be set to a first value (e.g., 1) indicating that the corresponding TRP is a transmission role TRP or a second value (e.g., 2) indicating that it is a reception role TRP.

The slot repetition period information, the slot offset, and the time domain allocation information may be used for time resource allocation for sensing.

The slot repetition period information may specify a period (slot repetition period) in which the OFDM symbol (sensing symbol) where a sensing sequence (or sensing data) is transmitted is allocated. As an embodiment, the slot repetition period information may indicate the period in which the sensing symbol is allocated as the number of slots. For example, the slot repetition period information may be set to the two-bit value that specifies the period (e.g., 1, 2, 4, 8) in which the sensing symbol is allocated.

The slot offset information may designate the offset from the start time of the period designated by the slot repetition period information to the start time of the slot where the sensing symbol is allocated. As an embodiment, the slot offset information may designate an offset on a per-slot basis. For example, the slot offset information may be set to a two-bit value that specifies the slot offset (e.g., 0, 1, 2, 3).

The time domain allocation information may be set to one of predefined values to designate the index of at least one OFDM symbol corresponding to the sensing symbol in each slot where the sensing symbol is allocated. For example, the time domain allocation information may be one-bit information set to one of a first value (e.g., 0) indicating that one OFDM symbol (e.g., an OFDM symbol with [OFDM symbol index=7]) is allocated as the sensing symbol in the corresponding slot or a second value (e.g., 1) indicating that two OFDM symbols (e.g., two OFDM symbols with [OFDM symbol index=0.6]) are allocated as the sensing symbol in the corresponding slot. Meanwhile, according to an embodiment, the time domain allocation information may be replaced with the sensing symbol index information (OFDM symbol index for each slot) of FIG. 9B.

The frequency domain allocation information may include information for continuous frequency allocation. As an embodiment, the frequency domain allocation information may be one-bit information set to one of the first value (e.g., 0) indicating the full bandwidth (e.g., all RBs (e.g., the total system bandwidth) available/configurable in the base station) or the second value (e.g., 1) indicating the half bandwidth (e.g., the first half RBs (e.g., the first half of the total system bandwidth) of all RBs available/configurable in the base station). Meanwhile, according to an embodiment, the frequency domain allocation information may be replaced by a combination of the start RE index information and the end RE index information of FIG. 9B.

The sensing waveform information may designate a type of waveform to be used for sensing (or sensing operation). For example, the sensing waveform information may be one-bit information set to either a first value (e.g., 0) indicating that the type of waveform is FMCW-based waveform or a second value (e.g., 1) indicating that the type of waveform is OFDM-based waveform.

The number of symbols for doppler processing may designate the number of accumulated symbols (OFDM symbols) (e.g., 32, 64, 128, 256) required for doppler processing. For example, the symbol count information for doppler processing may be two-bit information set to one of a first value (e.g., 0) indicating the number of accumulated symbols required for doppler processing is 32, a second value (e.g., 1) indicating that the number of accumulated symbols required for doppler processing is 64, a third value (e.g., 2) indicating that the number of accumulated symbols required for doppler processing is 128, and a fourth value (e.g., 3) indicating that the number of accumulated symbols required for doppler processing is 256.

According to an embodiment, the base station 320 (or transmission role TRP 410 or CU) may transmit the sensing configuration information to the transmission role TRP 410 or the reception role TRP 420 using a preconfigured interface (e.g., an F1 interface or an X2 interface).

[Sensing configuration procedure]

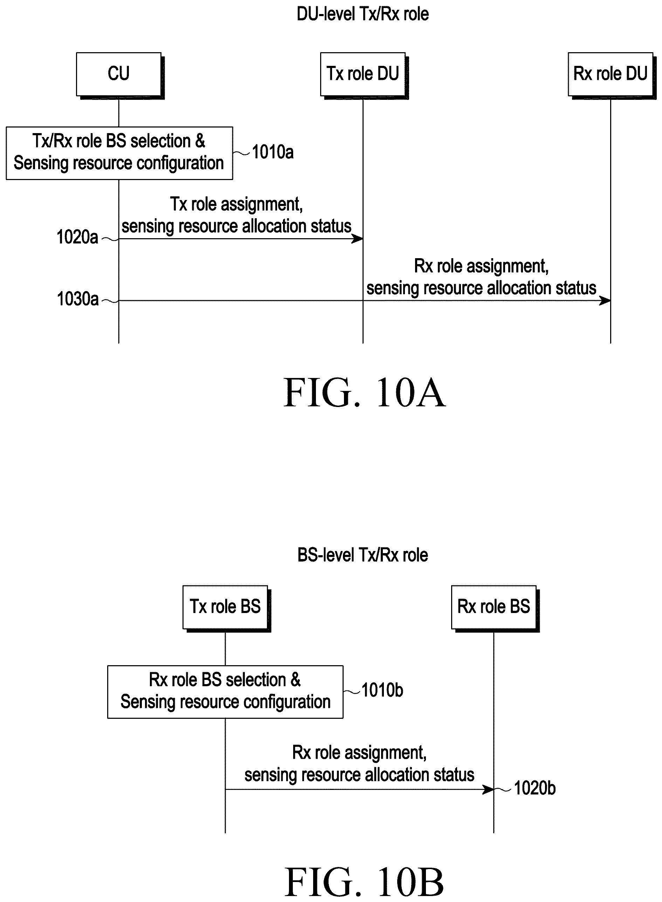

FIG. 10A illustrates a sensing configuration procedure according to an embodiment of the disclosure.

The sensing configuration procedure of FIG. 10A represents an example of a sensing configuration procedure between CU-TRPs (DUs) according to the TRP type (e.g., DU-level TRP type) at the lower level (e.g., DU-level) of the base station. As described above, in the case of DU level TRP type, at least one DU selected by the CU may perform operations of the transmission role TRP 410, and at least one other DU may perform operations of the reception role TRP 420.

Referring to FIG. 10A, in operation 1010a, the CU may select transmission/reception roles for the bistatic sensing structure/mode and configure sensing resources.

According to an embodiment, the CU may select at least one of the DUs of the CU as the transmission role TRP 410 and select at least one other DU as the reception role TRP 420. In the disclosure, the DU selected as the transmission role TRP may be referred to as a transmission role DU, and the DU selected as the reception role TRP may be referred to as a reception role DU.

According to an embodiment, the CU may allocate sensing resources (e.g., time/frequency resources) for bistatic sensing.

In operation 1020a, the CU may transmit information about transmission role assignment (transmission role assignment information) and information about sensing resource allocation to the transmission role DU/TRP.

According to an embodiment, the CU may transmit the transmission role assignment information and information about sensing resource allocation to the transmission role DU using a predefined interface (e.g., X2 interface). As an embodiment, the transmission role assignment information may be information for notifying that the corresponding DU is selected/configured as the transmission role DU (or transmission role TRP). For example, the transmission role assignment information may be the transmission role indicator information or role indicator information described above in FIG. 9D.

According to an embodiment, the CU may transmit the sensing configuration information including the transmission role assignment information and information about sensing resource allocation to the transmission role DU. In an embodiment, the sensing configuration information may include all or some of the information included in FIGS. 9A, 9B, 9C, and/or 9D.

In operation 1030a, the CU may transmit information about reception role assignment (reception role assignment information) and information about sensing resource allocation to the reception role DU/TRP. Operation 1020a and operation 1030a may be performed simultaneously.

According to an embodiment, the CU may transmit the reception role assignment information and information about sensing resource allocation to the reception role DU using a predefined interface (e.g., X2 interface). As an embodiment, the reception role assignment information may be information for indicating that the corresponding DU is selected/set as a reception role DU (or reception role TRP). For example, the reception role assignment information may be the reception role indicator information or role indicator information of FIG. 9D.

According to an embodiment, the CU may transmit the sensing configuration information including the reception role assignment information and information about sensing resource allocation to the reception role DU. In an embodiment, the sensing configuration information may include all or some of the information included in FIGS. 9A, 9B, 9C, and/or 9D.

FIG. 10B illustrates a sensing configuration procedure according to an embodiment of the disclosure.

The sensing configuration procedure of FIG. 10B represents an example of a sensing configuration procedure between TRPs according to the base station level (e.g., gNB-level) TRP type (base station level TRP type). As described above, in the case of base station level TRP type, at least one other base station selected by the base station performing operations of the transmission role TRP 410 may perform operations of the reception role TRP 420.

Referring to FIG. 10B, in operation 1010b, the base station (or the transmission role base station/TRP) may select a reception role base station/TRP and configure sensing resources.

According to an embodiment, the base station may configure itself as the transmission role base station performing transmission role TRP and select at least one other base station as the reception role base station performing the reception role TRP.

In operation 1020b, the transmission role base station/TRP may transmit information about reception role assignment (the reception role assignment information) and information about sensing resource allocation to the reception role base station. As an embodiment, the reception role assignment information may be information for notifying that the corresponding base station is selected/configured as the reception role base station/TRP. For example, the reception role assignment information may be the reception role indicator information or role indicator information of FIG. 9D.

According to an embodiment, the transmission role base station may transmit the reception role assignment information and information about sensing resource allocation to the reception role base station using a predefined interface (e.g., F1 interface).

According to an embodiment, the transmission role base station may transmit the sensing configuration information including the reception role assignment information and information about sensing resource allocation to the reception role base station. In an embodiment, the sensing configuration information may include all or some of the information included in FIGS. 9A, 9B, 9C, and/or 9D.

FIG. 11A illustrates a sensing configuration procedure according to an embodiment of the disclosure.

FIG. 11A may be a sensing configuration procedure between a base station/TRP 320 and a UE 310. In the embodiment of FIG. 11A, the TRP 320 may be the transmission role TRP 410 or reception role TRP 420.

Referring to FIG. 11A, in operation 1110a, the TRP 320 may transmit the sensing configuration information for sensing configuration to at least one UE 310. As an embodiment, the transmission role TRP 410 and reception role TRP 420 may transmit the same sensing configuration information to at least one UE associated with each of them.

In operation 1120a, the UE 310 may obtain (or decode) sensing parameter(s) based on the sensing configuration information. Thereafter, the TRP 320 and UE 310 may perform a communication operation and/or a sensing operation based on the sensing configuration information.

According to an embodiment, the TRP 320 may transmit the sensing configuration information to the UE 310 through higher layer signaling (e.g., SIB, RRC message, MAC CE, etc.) or PHY layer signaling (e.g., DCI, etc.). For example, the TRP 320 may transmit an RRC message including the sensing configuration information to the UE 310. For example, the TRP 320 may transmit a MAC CE including the sensing configuration information to the UE 320. For example, the TRP 320 may broadcast an SIB including the sensing configuration information. For example, the TRP 320 may transmit DCI including the sensing configuration information to the UE 320.

According to an embodiment, the sensing configuration information may include all or portion of the information included in the sensing configuration information of FIGS. 9A, 9B, 9C, and/or 9D.

The sensing configuration information according to an embodiment may include resource allocation information (sensing resource allocation information), transmission mode information, and/or transmission parameter information.

The resource allocation information (sensing resource allocation information) may include frequency resource allocation information and/or time resource allocation information.

As an embodiment, the frequency resource allocation information may include information about continuous frequencies allocated for sensing. For example, the frequency resource allocation information may include a combination of start RE index information and end RE index information of FIG. 9B, or frequency domain allocation information of FIG. 9C.

As an embodiment, the time resource allocation information may include OFDM symbol index information specifying the index of at least one OFDM symbol allocated for sensing. For example, the time resource allocation information may include sensing symbol index information of FIG. 9B or time domain allocation information of FIG. 9C.

The transmission mode information may indicate the transmission mode of the sensing signal. As an embodiment, the transmission mode may be one of a periodic transmission mode, a semi-persistent transmission mode, and an aperiodic transmission mode. As an embodiment, the bistatic sensing structure/mode may be limited as using only the periodic transmission mode and, in this case, the transmission mode information may not be included in the sensing configuration information.

The transmission parameter information may include at least one piece of parameter information for transmission of the sensing signal. For example, the transmission parameter information may include period information (e.g., slot repetition period information of FIG. 9B/C/D), slot offset information (e.g., slot offset information of FIG. 9B/C/D), and/or symbol count information for doppler processing (e.g., symbol count information for doppler processing of FIG. 9A/B/C/D).

According to an embodiment, the sensing configuration information may include a periodic sensing stop trigger. As an embodiment, the periodic sensing stop trigger may be transferred to the UE when the corresponding trigger occurs in the corresponding TRP or when the corresponding trigger is transferred from another TRP.

FIG. 11B illustrates a sensing configuration procedure using system information (SI) according to an embodiment of the disclosure.

FIG. 11B may illustrate a sensing configuration procedure using SI between the base station/TRP 320 and the UE 310. In the embodiment of FIG. 11B, the TRP 320 may be the transmission role TRP 410 or reception role TRP 420.

The embodiment of FIG. 11B corresponds to an embodiment where set ID information (e.g., the set ID information of FIG. 9B) is broadcast using SI as the sensing configuration information.

Referring to FIG. 11B, in operation 1110b, the TRP 320 may broadcast the set ID information using SI. For example, the TRP 320 may broadcast an SIB including set ID information. As an embodiment, the TRP 320 may broadcast the set ID information periodically.

As an embodiment, reception role TRP 420 may configure a set ID of set ID information based on the sensing configuration information (e.g., the sensing configuration information of FIG. 9D) received from the transmission role TRP 410 or CU. As an embodiment, the transmission role TRP 410 may configure the set ID of set ID information based on the sensing configuration information (e.g., the sensing configuration information of FIG. 9D) received from the CU, or configure the set ID of set ID information based on the sensing configuration information (e.g., the sensing configuration information of FIG. 9D) configured by itself.

When the set ID information is used as the sensing configuration information, the TRP 320 and UE 310 need to already know the configuration of the sensing parameter set for each set ID.

In operation 1120b, the UE 310 may receive the set ID information and obtain (or decode) sensing parameters (sensing parameter set) based on the set ID information. For example, the UE 310 may obtain the configuration of the sensing parameter set corresponding to the set ID indicated by the received set ID information. For example, when the table of FIG. 8B is previously shared between the TRP 320 and the UE 310, and if the set ID indicated by the received set ID information has a value of 1, a slot repetition period having a value of 4, a slot offset having a value of 1, an OFDM symbol index for each slot having a value of 7, a start RE index having a value of 0, an end RE index having a value of 1024, a sensing waveform having an OFDM-based waveform, and a symbol count for doppler processing having a count of 64 may be obtained as configurations of the sensing parameter set.

Thereafter, the TRP 320 and the UE 310 may perform a communication operation and/or a sensing operation based on the configuration of the sensing parameter set.

As such, when the set ID information is used as sensing configuration information, the signaling overhead may be reduced.

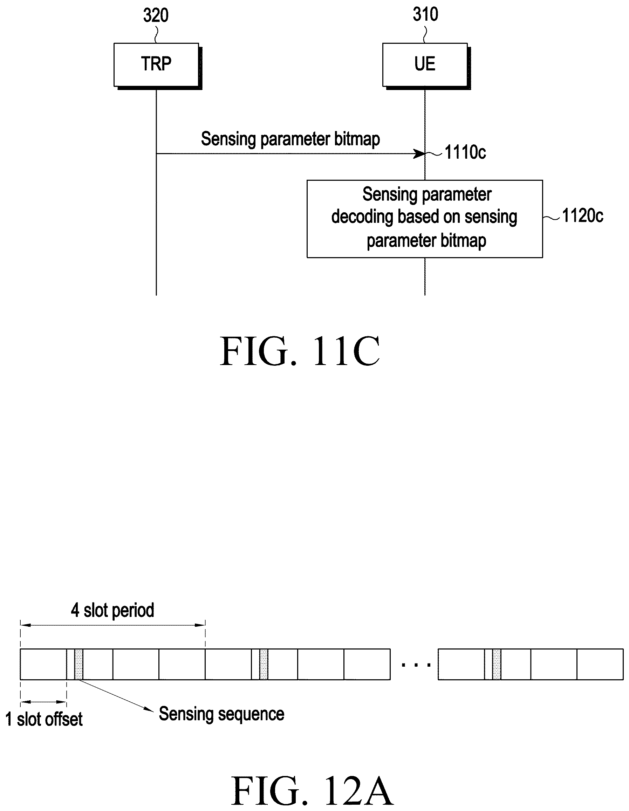

FIG. 11C illustrates a sensing configuration procedure using system information (SI) according to an embodiment of the disclosure.

FIG. 11C may illustrate a sensing configuration procedure using SI between the base station/TRP 320 and the UE 310. In the embodiment of FIG. 11C, the TRP 320 may be the transmission role TRP 410 or the reception role TRP 420.

The embodiment of FIG. 11C corresponds to an embodiment where a sensing parameter bitmap (e.g., the sensing parameter bitmap of FIG. 9C) is broadcast using SI as the sensing configuration information.

Referring to FIG. 11C, in operation 1110c, the TRP 320 may broadcast the sensing parameter bitmap using SI. For example, the TRP 320 may broadcast an SIB including the sensing parameter bitmap. As an embodiment, the TRP 320 may broadcast the sensing parameter bitmap periodically.

As an embodiment, the reception role TRP 420 may configure the sensing parameter bitmap based on the sensing configuration information (e.g., the sensing configuration information of FIG. 9D) received from the transmission role TRP 410 or CU. As an embodiment, the transmission role TRP 410 may configure the sensing parameter bitmap based on the sensing configuration information (e.g., the sensing configuration information of FIG. 9D) received from the CU, or configure the sensing parameter bitmap based on the sensing configuration information (e.g., the sensing configuration information of FIG. 9D) configured by itself.

When the sensing parameter bitmap is used as the sensing configuration information, the TRP 320 and UE 310 need to already know the configuration of the sensing parameter set associated with sensing parameter bitmap. For example, the TRP 320 and UE 310 may already know the configuration of the sensing parameter bitmap.

In operation 1120c, the UE 310 may receive the sensing parameter bitmap and obtain (or decode) sensing parameters (sensing parameter set) based on the sensing parameter bitmap.

For example, the UE 310 may obtain the configuration of the sensing parameter set corresponding to the setting value of the sensing parameter bitmap. For example, when the sensing parameter bitmap has the configuration of the sensing parameter bitmap of FIG. 9C, among the total nine bits of the sensing parameter bitmap, the two LSB bits may indicate the setting value (e.g., a setting value indicating one of the slot repetition periods {1, 2, 4, 8}) of the slot repetition period information, the next two bits may indicate the setting value (e.g., a setting value indicating one of the slot offsets {0, 1, 2, 3}) of the offset information, the next one bit may indicate the setting value (e.g., a setting value indicating one of the time domain allocations {0 or 1}) of the time domain allocation information, the next one bit may indicate the setting value (e.g., a setting value indicating one of the frequency domain allocations {0 or 1}) of the frequency domain allocation information, the next one bit may indicate the setting value (e.g., a setting value indicating one of the waveform types {FMCW(0), OFDM(1)} of the waveform type information, and the one MSB bit may indicate the setting value (e.g., a setting value indicating one of the symbol counts {32, 64, 128, 256}) of the symbol count information for doppler processing.

Thereafter, the TRP 320 and the UE 310 may perform a communication operation and/or a sensing operation based on the configuration of the sensing parameter set.

As such, when the sensing parameter bitmap is used as the sensing configuration information, the signaling overhead may be reduced.

[Sensing resource allocation for periodic transmission]

Hereinafter, an example of sensing resource allocation configured based on sensing configuration information is described.

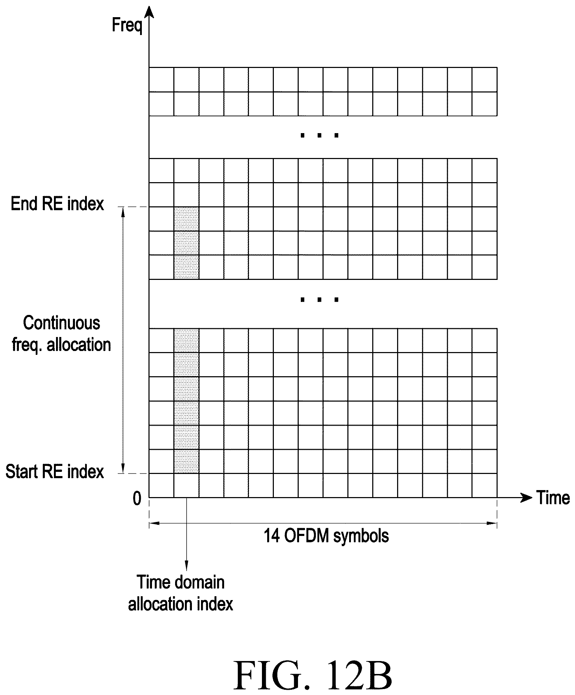

In the embodiments of FIGS. 12A and 12B, for convenience of description, it is assumed that the time-frequency domain structure follows the time-frequency domain structure of FIG. 2A, and the frame, subframe, and slot structure follow the frame, subframe, and slot structure of FIG. 2B, but the embodiments are not limited thereto.

FIG. 12A illustrates an example of sensing resource allocation according to an embodiment of the disclosure.

In the time domain, the time resource for sensing may be allocated in a slot-level. In this case, slot repetition period information, slot offset information, and/or time resource allocation information may be used as sensing configuration information to configure a time resource for sensing. As an embodiment, the time resource allocation information may be sensing symbol index information of FIG. 9B or time domain allocation information of FIG. 9C.

The embodiment of FIG. 12A may be an embodiment in which the value of slot repetition period information is set to a value indicating that the slot repetition period is 4, the value of slot offset information is set to a value indicating that the slot offset is 1, and the value of time resource allocation information is set to a value indicating the index of the second OFDM symbol in the slot where the sensing symbol including the sensing sequence (data) is allocated. In this case, as illustrated, the allocation of the sensing symbol (or the sensing resource) may be repeated in a period corresponding to the length of the four slots, the slot (the second slot of the corresponding period) one slot offset away from the start slot of the corresponding period may be allocated as the slot where the sensing symbol is allocated, and the second OFDM symbol in the corresponding slot may be allocated as the sensing symbol. Meanwhile, unlike shown, a plurality of OFDM symbols in one slot may be allocated as sensing symbols.

FIG. 12B illustrates an example of sensing resource allocation according to an embodiment of the disclosure.

In the time domain, the time resource for sensing may be allocated in an OFDM symbol-level. Further, in the frequency domain, the time resource for sensing may be allocated in an RE-level.

In the case of OFDM symbol-level allocation, time resources may be allocated on a per-OFDM symbol basis in the slot. In this case, time resource allocation information may be used as sensing configuration information to configure a time resource for sensing. As an embodiment, the time resource allocation information may be sensing symbol index information of FIG. 9B or time domain allocation information of FIG. 9C.

In the case of RE-level allocation, for continuous frequency resource allocation (continuous frequency allocation) on a per-RE basis, the start RE index information and the end RE index information of FIG. 9B may be used as sensing configuration information.

The embodiment of FIG. 12B may be an embodiment in which the value of time resource allocation information is set to a value indicating the index of the second OFDM symbol in the slot where the sensing symbol is allocated, start RE index information is set to a value indicating the index of the RE corresponding to the second subcarrier of the corresponding OFDM symbol, and end RE index information is set to a value indicating the index of the nth RE of the corresponding OFDM symbol. In this case, as illustrated, the RE (start RE) corresponding to start RE index information of the second OFDM symbol in the corresponding slot to the RE (end RE) corresponding to end RE index information may be allocated as the frequency resource (area) for sensing in the continuous RE. Meanwhile, unlike shown, a plurality of OFDM symbols in one slot may be allocated as sensing symbols. Further, according to an embodiment, it is also possible to allocate continuous frequencies for sensing in the RB-level rather than the RE-level. In this case, information indicating the index of the start RB (start RB index information) and information indicating the index of the end RB (end RB index information) may be used as sensing configuration information.

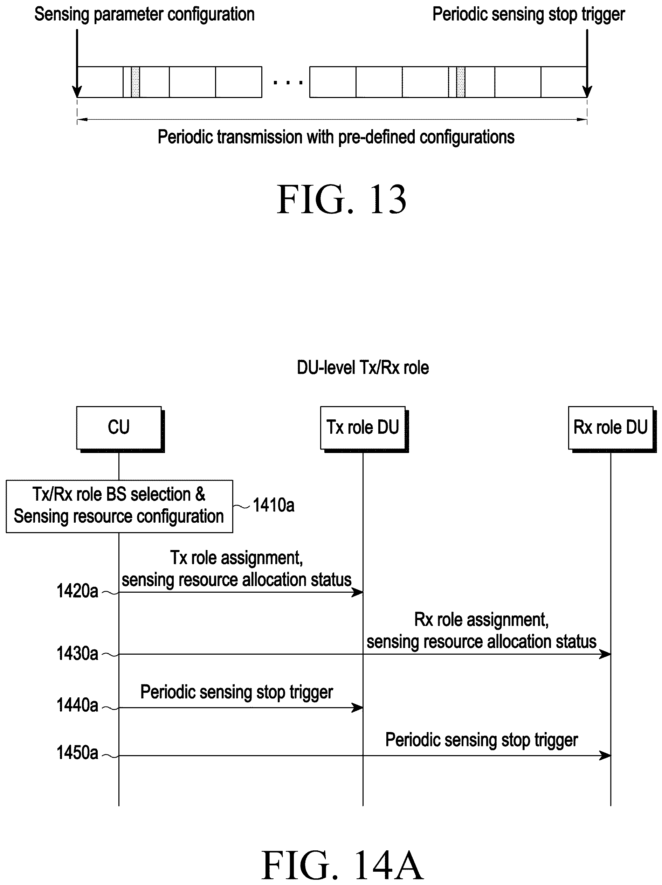

FIG. 13 illustrates an example of sensing resource allocation according to a periodic transmission mode according to an embodiment of the disclosure.

The sensing resource allocation according to the periodic transmission mode of FIG. 13 may be an example of sensing resource allocation according to the periodic transmission mode in the bistatic sensing structure/mode.

Referring to FIG. 13, from the time when sensing configuration information (sensing parameter configuration) for the periodic transmission mode is configured to the time when the periodic sensing stop trigger is transmitted, a sensing signal (or a sensing sequence) may be transmitted repeatedly (or periodically) using the sensing resource set by the sensing configuration information.

Like the embodiment of FIG. 12A, the embodiment of FIG. 13 may be an embodiment in which the value of slot repetition period information is set to a value indicating that the slot repetition period is 4, the value of slot offset information is set to a value indicating that the slot offset is 1, and the value of time resource allocation information is set to a value indicating the index of the second OFDM symbol in the slot where the sensing symbol including the sensing sequence (data) is allocated. In this case, as illustrated, the allocation of the sensing symbol (or the sensing resource) for sensing may be repeated in a period corresponding to the length of the four slots, the slot (the second slot of the corresponding period) one slot offset away from the start slot of the slot repetition period may be allocated as the slot where the sensing symbol is allocated, and the second OFDM symbol in the corresponding slot may be allocated as the sensing symbol. Meanwhile, unlike shown, a plurality of OFDM symbols in one slot may be allocated as sensing symbols.

According to an embodiment, in the periodic transmission mode, the start time of the first period (slot repetition period) may correspond to the time when sensing configuration information for the periodic transmission mode is transmitted by the CU or transmission role TRP.

As an embodiment, in the periodic transmission mode, the end time may correspond to the time when the periodic sensing stop trigger is transmitted.

[Operation according to periodic transmission mode]

FIG. 14A illustrates a sensing procedure according to a periodic transmission mode according to an embodiment of the disclosure.

The sensing procedure according to the periodic transmission mode of FIG. 14A may be an example of a sensing procedure according to the periodic transmission mode in the bistatic sensing structure/mode.

In the embodiment of FIG. 14A, the TRP type of bistatic sensing may be a DU-level TRP type.

In the case of DU-level TRP type, configuration of the transmission/reception TRP roles and sensing configuration information for bistatic sensing may be performed by the CU. In the case of periodic transmission mode of DU-level TRP type, the TRP (e.g., the transmission role TRP 410 and/or the reception role TRP 420) may transmit the sensing configuration information including minimal configuration information for periodic transmission to at least one UE 310.

In the case of periodic transmission mode of DU-level TRP type, the transmission role TRP 410 may repeatedly transmit sensing signals at set periods based on the sensing configuration information. The transmission role TRP 410 may repeatedly transmit sensing signals at set periods until a periodic sensing stop trigger is transmitted. The periodic sensing stop trigger may be transmitted to the transmission role TRP 410 and/or the reception role TRP 420 by the CU.

In the case of periodic transmission mode of DU-level TRP type, the reception role TRP 420 may receive reflected sensing signals based on the sensing configuration information. The reception role TRP 420 may receive the reflected sensing signals until a periodic sensing stop trigger is transmitted.

Hereinafter, an exemplary sensing procedure according to periodic transmission mode is described with reference to FIG. 14A.

Referring to FIG. 14A, in operation 1410a, the CU may select the transmission/reception roles for the bistatic sensing structure/mode and configure sensing resources.

According to an embodiment, the CU may select at least one of the DUs of the CU as the transmission role TRP and select at least one other DU as the reception role TRP. In the disclosure, the DU selected as the transmission role TRP may be referred to as a transmission role DU, and the DU selected as the reception role TRP may be referred to as a reception role DU.

According to an embodiment, the CU may allocate sensing resources (e.g., time/frequency resources) for periodic transmission. An example of sensing resources allocated for periodic transmission may be as illustrated in FIGS. 12A/B and/or FIG. 13.

In operation 1420a, the CU may transmit information about the transmission role assignment (transmission role assignment information) and information about sensing resource allocation to the transmission role DU/TRP.

According to an embodiment, the CU may transmit the transmission role assignment information and information about sensing resource allocation to the transmission role DU using a predefined interface (e.g., X2 interface). As an embodiment, the transmission role assignment information may be information for notifying that the corresponding DU is selected/configured as the transmission role DU (or transmission role TRP). For example, the transmission role assignment information may be the transmission role indicator information or role indicator information described above in FIG. 9D.

According to an embodiment, the CU may transmit the sensing configuration information including the transmission role assignment information and information about sensing resource allocation to the transmission role DU. In an embodiment, the sensing configuration information may include all or some of the information included in FIGS. 9A, 9B, 9C, and/or 9D.

In operation 1430a, the CU may transmit information about reception role assignment (reception role assignment information) and information about sensing resource allocation to the reception role DU/TRP. Operation 1420a and operation 1430a may be performed simultaneously.

According to an embodiment, the CU may transmit the reception role assignment information and information about sensing resource allocation to the reception role DU using a predefined interface (e.g., X2 interface). As an embodiment, the reception role assignment information may be information for indicating that the corresponding DU is selected/set as a reception role DU (or reception role TRP). For example, the reception role assignment information may be the reception role indicator information or role indicator information of FIG. 9D.

According to an embodiment, the CU may transmit the sensing configuration information including the reception role assignment information and information about sensing resource allocation to the reception role DU. In an embodiment, the sensing configuration information may include all or some of the information included in FIGS. 9A, 9B, 9C, and/or 9D.

In operation 1440a, the CU may transmit a periodic sensing stop trigger for stopping periodic sensing to the transmission role DU/TRP. According to an embodiment, the transmission role DU may transmit the corresponding periodic sensing stop trigger to at least one UE associated with the transmission role DU at the time of receiving the periodic sensing stop trigger, and may terminate the sensing operation (e.g., the sensing signal transmission operation). In this case, the UE may identify that the sensing signal is not transmitted from the time when the periodic sensing stop trigger is received.

In operation 1450a, the CU may transmit a periodic sensing stop trigger for stopping periodic sensing to the reception role DU/TRP. Operation 1440a and operation 1450a may be performed simultaneously. According to an embodiment, the reception role DU may transmit the corresponding periodic sensing stop trigger to at least one UE associated with the reception role DU at the time of receiving the periodic sensing stop trigger, and may terminate the sensing operation (e.g., the sensing signal reception operation). In this case, the UE may identify that the sensing signal is not transmitted from the time when the periodic sensing stop trigger is received.

According to an embodiment, the CU may transmit a periodic sensing stop trigger when change of the bistatic sensing structure is required. For example, the CU may transmit a periodic sensing stop trigger when change of the transmission role TRP and/or the reception role TRP is required. According to an embodiment, the CU may transmit a periodic sensing stop trigger when bistatic sensing according to the current bistatic sensing structure no longer needs to be performed. In this case, the UE may identify that the sensing signal is not transmitted from the time when the periodic sensing stop trigger is received.

The transmission role DU, the reception role DU, and/or UE may perform a communication operation and/or sensing operations.

According to an embodiment, the transmission role DU may periodically transmit sensing signals (or sensing sequences) from the time when the CU transmits the sensing configuration information for bistatic sensing (e.g., the sensing configuration information of FIG. 9D) until the time when the CU transmits the periodic sensing stop trigger. As an embodiment, the start time of the first period may correspond to the time when the CU transmits the sensing configuration information.

According to an embodiment, the reception role DU may receive sensing signals (or sensing sequences) transmitted by the transmission role DU and reflected by the target from the time when the CU transmits the sensing configuration information for bistatic sensing (e.g., the sensing configuration information of FIG. 9D) until the time when the CU transmits the periodic sensing stop trigger. The reception role DU may obtain sensing data and/or sensing results based on sensing signals.

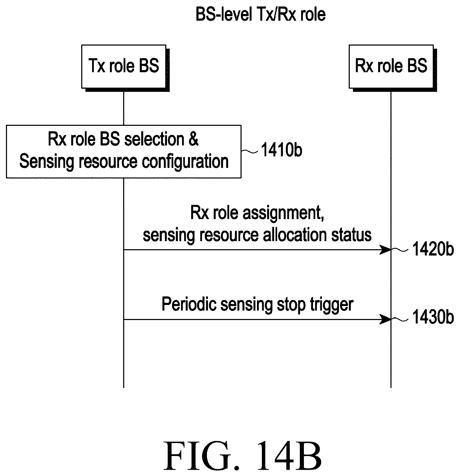

FIG. 14B illustrates a sensing procedure according to a periodic transmission mode according to an embodiment of the disclosure.

The sensing procedure according to the periodic transmission mode of FIG. 14B may be an example of sensing procedure according to the periodic transmission mode in the bistatic sensing structure/mode.

In the embodiment of FIG. 14B, the TRP type for bistatic sensing may be a base station-level (e.g., gNB-level) type.

In the case of base station-level type, configuration of the transmission/reception TRP roles and sensing configuration information for bistatic sensing may be performed by the transmission role base station.

In the case of periodic transmission mode of base station-level type, the TRP (e.g., the transmission role TRP 410 and/or the reception role TRP 420) may transmit the sensing configuration information including minimal configuration information for periodic transmission to at least one UE 310.

In the case of periodic transmission mode of base station-level type, the transmission role TRP 410 may repeatedly transmit sensing signals at set periods based on the sensing configuration information. The transmission role TRP 410 may repeatedly transmit sensing signals at set periods until a periodic sensing stop trigger is transmitted. The periodic sensing stop trigger may be transmitted to the reception role TRP 420 by the transmission role TRP 410.

In the case of periodic transmission mode of base station-level type, the reception role TRP 420 may receive the reflected sensing signals based on the sensing configuration information. The reception role TRP 420 may receive the reflected sensing signals until a periodic sensing stop trigger is transmitted.

Hereinafter, an exemplary sensing procedure according to the periodic transmission mode is described with reference to FIG. 14B.

Referring to FIG. 14B, in operation 1410b, the base station (or the transmission role base station/TRP) may select a reception role base station/TRP and configure sensing resources.

According to an embodiment, the base station may configure itself as the transmission role base station performing transmission role TRP and select at least one other base station as the reception role base station performing the reception role TRP.

According to an embodiment, the transmission role base station may allocate sensing resources (e.g., time-/frequency resources) for periodic transmission. An example of sensing resources allocated for periodic transmission may be as illustrated in FIGS. 12A/B and/or FIG. 13.

In operation 1420b, the transmission role base station/TRP may transmit information about reception role assignment (the reception role assignment information) and information about sensing resource allocation to the reception role base station/TRP.

According to an embodiment, the transmission role base station may transmit the reception role assignment information and information about sensing resource allocation to the reception role base station using a predefined interface (e.g., F1 interface). As an embodiment, the reception role assignment information may be information for indicating that the corresponding base station is selected/set as a reception role base station (or reception role TRP). For example, the transmission role assignment information may be the transmission role indicator information or the role indicator information described in connection with FIG. 9D.

According to an embodiment, the transmission role base station may transmit the sensing configuration information including the reception role assignment information and information about sensing resource allocation to the reception role base station/TRP. In an embodiment, the sensing configuration information may include all or some of the information included in FIGS. 9A, 9B, 9C, and/or 9D.

In operation 1430b, the transmission role base station/TRP may transmit a periodic sensing stop trigger for stopping periodic sensing to the transmission role base station/TRP.

According to an embodiment, the transmission role base station may transmit a periodic sensing stop trigger when change of the bistatic sensing structure is required. For example, the transmission role base station may transmit a periodic sensing stop trigger when change of the transmission role TRP and/or the reception role TRP is required. According to an embodiment, the transmission role base station may transmit a periodic sensing stop trigger when bistatic sensing according to the current bistatic sensing structure no longer needs to be performed.

According to an embodiment, the transmission role base station may transmit the corresponding periodic sensing stop trigger to at least one UE associated with transmission role base station and may terminate the sensing operation (e.g., the sensing signal transmission operation). In this case, the UE may identify that the sensing signal is not transmitted from the time when the periodic sensing stop trigger is received.

According to an embodiment, the reception role base station may transmit the corresponding periodic sensing stop trigger to at least one UE associated with reception role base station and may terminate the sensing operation (e.g., the sensing signal the transmission operation). In this case, the UE may identify that the sensing signal is not transmitted from the time when the periodic sensing stop trigger is received.

The transmission role base station, the reception role base station, and/or UE may perform a communication operation and/or sensing operations.

According to an embodiment, the transmission role base station may periodically transmit sensing signals (or sensing sequences) from the time of transmitting the sensing configuration information for bistatic sensing (e.g., the sensing configuration information of FIG. 9D) until the time of transmitting the periodic sensing stop trigger. As an embodiment, the start time of the first period may correspond to the time when the transmission role base station transmits the sensing configuration information.

According to an embodiment, the reception role base station may receive sensing signals (or sensing sequences) transmitted by the transmission role base station and reflected by the target from the time when transmission role base station for bistatic sensing transmits the sensing configuration information (e.g., the sensing configuration information of FIG. 9D) until the time when transmission role base station transmits the periodic sensing stop trigger. The reception role base station may obtain sensing data and/or sensing results based on sensing signals.

[Sensing result reporting procedure]

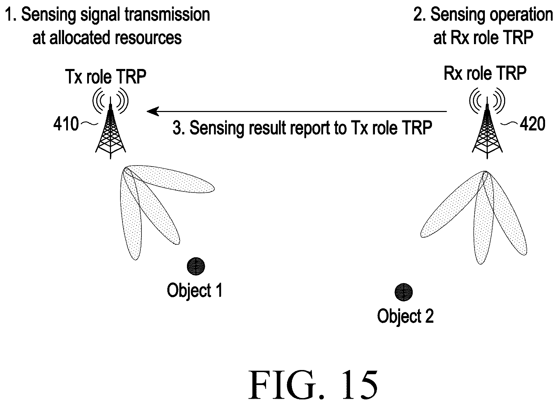

FIG. 15 illustrates a sensing result reporting procedure according to an embodiment of the disclosure.

The sensing result reporting procedure of FIG. 15 may be an example of a sensing result reporting procedure according to a bistatic sensing structure.

Referring to FIG. 15, in operation 1, the transmission role TRP 410 may transmit sensing signals using allocated resources (e.g., time/frequency resources). According to an embodiment, the transmission role TRP 410 may transmit a sensing signal using time/frequency resources configured based on the sensing configuration information. In an embodiment, the sensing configuration information may include all or some of the information included in FIGS. 9A, 9B, 9C, and/or 9D.

In operation 2, the reception role TRP 420 may perform a sensing operation. According to an embodiment, the reception role TRP 420 may receive sensing signals (e.g., the sensing signals reflected from the target (e.g., the objects 1 and 2 of FIG. 15)) using time/frequency resources configured based on the sensing configuration information, and obtain sensing data and/or sensing results based on the received sensing signals. In an embodiment, the sensing configuration information may include all or some of the information included in FIGS. 9A, 9B, 9C, and/or 9D.

According to an embodiment, the sensing data may include information (sensing information) that may be derived from the reflection signal. According to an embodiment, the sensing information may include information that may be measured from a signal strength, a delay, a timing, an angle of arrival (AoA), a time of flight (ToF), and/or other reflection signals.

According to an embodiment, the sensing data may further include a description of the sensing data, information for identifying a purpose of sensing, information for identifying a source of sensing, and/or information (e.g., target identification information, target location information, etc.) on a target associated with the sensing data.

According to an embodiment, sensing data (or sensing information) may be used to generate a sensing result for the target.

According to an embodiment, the sensing result may include information about a distance, a location, and/or a velocity (doppler) with respect to the target.

In operation 3, the reception role TRP 420 may transmit a report (sensing result report) including sensing data and/or sensing results to the transmission role TRP 410.

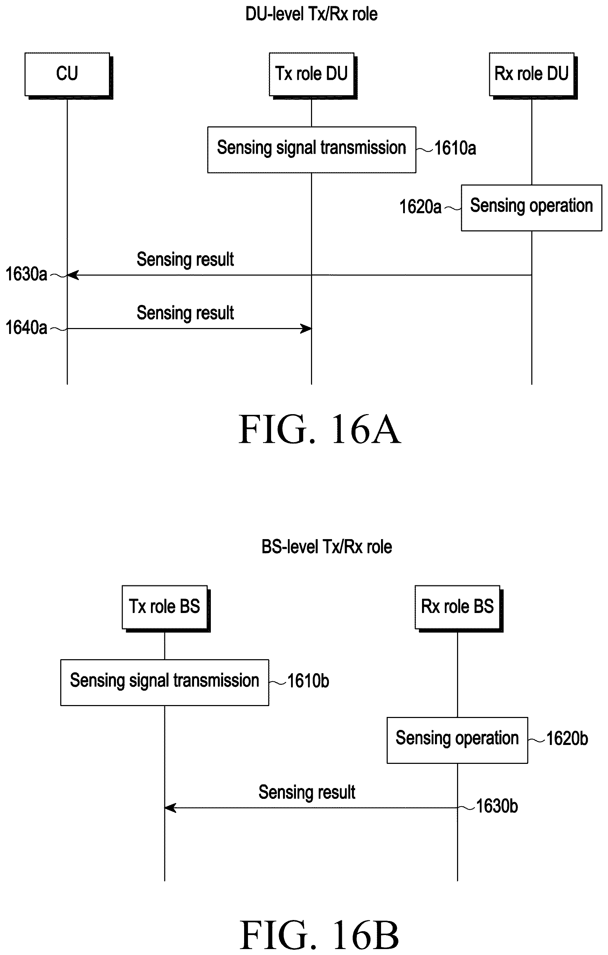

FIG. 16A illustrates a sensing result reporting procedure according to an embodiment of the disclosure.

The sensing result reporting procedure of FIG. 16A may be an example of a sensing result reporting procedure according to a bistatic sensing structure.

In the embodiment of FIG. 16A, the TRP type for bistatic sensing may be a base station lower level (e.g., DU-level) TRP type (DU-level TRP type).

Referring to FIG. 16A, in operation 1610a, the transmission role DU/TRP 410 may transmit sensing signals based on the sensing configuration information. According to an embodiment, the transmission role TRP 410 may transmit a sensing signal using time/frequency resources configured based on the sensing configuration information. In an embodiment, the sensing configuration information may include all or some of the information included in FIGS. 9A, 9B, 9C, and/or 9D.

In operation 1620a, the reception role DU/TRP 420 may perform a sensing operation based on the sensing configuration information. According to an embodiment, the reception role TRP 420 may receive sensing signals (e.g., the sensing signals reflected from the target (e.g., the objects 1 and 2 of FIG. 15)) using time/frequency resources configured based on the sensing configuration information, and obtain sensing data and/or sensing results based on the received sensing signals. In an embodiment, the sensing configuration information may include all or some of the information included in FIGS. 9A, 9B, 9C, and/or 9D.

According to an embodiment, the sensing data may include information (sensing information) that may be derived from the reflection signal. According to an embodiment, the sensing information may include information that may be measured from a signal strength, a delay, a timing, an angle of arrival (AoA), a time of flight (ToF), and/or other reflection signals.

According to an embodiment, the sensing data may further include a description of the sensing data, information for identifying a purpose of sensing, information for identifying a source of sensing, and/or information (e.g., target identification information, target location information, etc.) on a target associated with the sensing data.

According to an embodiment, sensing data (or sensing information) may be used to generate a sensing result for the target.

According to an embodiment, the sensing result may include information about a distance, a location, and/or a velocity (doppler) with respect to the target.

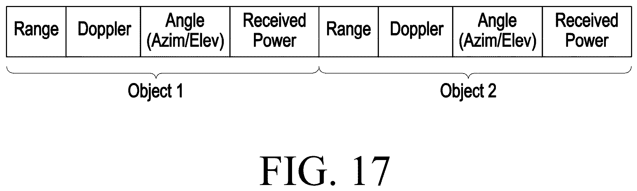

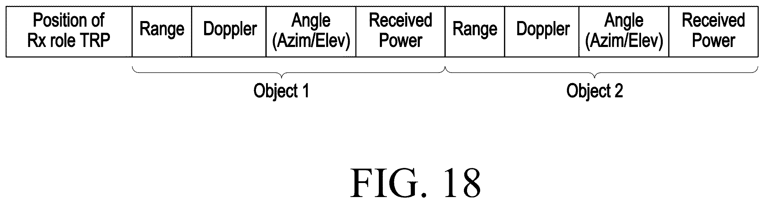

In operation 1630a, the reception role TRP 420 may transmit a report (sensing result report) including sensing data and/or sensing results to CU. According to an embodiment, the reception role TRP 420 may transmit the sensing result report to CU using a predefined interface (e.g., F1 interface). As an embodiment, the sensing result report may have the configuration of FIG. 17 or FIG. 18, but is not limited thereto, and may be various combinations of the above-described sensing data and/or sensing results.

In operation 1640a, the CU may transmit the sensing result report to the transmission role TRP 410. According to an embodiment, the CU may transmit the sensing result report to the transmission role TRP 410 using a predefined interface (e.g., F1 interface).

FIG. 16B illustrates a sensing result reporting procedure according to an embodiment of the disclosure.

The sensing result reporting procedure of FIG. 16B may be an example of a sensing result reporting procedure according to a bistatic sensing structure.

In the embodiment of FIG. 16B, the TRP type for bistatic sensing may be a base station-level (e.g., gNB-level) TRP type (base station level TRP type).

Referring to FIG. 16B, in operation 1610b, the transmission role base station/TRP 410 may transmit sensing signals based on the sensing configuration information. According to an embodiment, the transmission role TRP 410 may transmit a sensing signal using time/frequency resources configured based on the sensing configuration information. In an embodiment, the sensing configuration information may include all or some of the information included in FIGS. 9A, 9B, 9C, and/or 9D.

In operation 1620a, the reception role base station/TRP 420 may perform a sensing operation based on the sensing configuration information. According to an embodiment, the reception role TRP 420 may receive sensing signals (e.g., the sensing signals reflected from the target (e.g., the objects 1 and 2 of FIG. 15)) using time/frequency resources configured based on the sensing configuration information, and obtain sensing data and/or sensing results based on the received sensing signals. In an embodiment, the sensing configuration information may include all or some of the information included in FIGS. 9A, 9B, 9C, and/or 9D.

According to an embodiment, the sensing data may include information (sensing information) that may be derived from the reflection signal. According to an embodiment, the sensing information may include information that may be measured from a signal strength, a delay, a timing, an angle of arrival (AoA), a time of flight (ToF), and/or other reflection signals.

According to an embodiment, the sensing data may further include a description of the sensing data, information for identifying a purpose of sensing, information for identifying a source of sensing, and/or information (e.g., target identification information, target location information, etc.) on a target associated with the sensing data.

According to an embodiment, sensing data (or sensing information) may be used to generate a sensing result for the target.

According to an embodiment, the sensing result may include information about a distance, a location, and/or a velocity (doppler) with respect to the target.

In operation 1630a, the reception role TRP 420 may transmit a report (sensing result report) including sensing data and/or sensing results to the transmission role TRP 410. According to an embodiment, the reception role TRP 420 may transmit the sensing result report to the transmission role TRP 410 using a predefined interface (e.g., X2 interface). As an embodiment, the sensing result report may have the configuration of FIG. 17 or FIG. 18, but is not limited thereto, and may be various combinations of the above-described sensing data and/or sensing results.

[Configuration of sensing result report]

FIG. 17 illustrates a configuration of a sensing result report according to an embodiment of the disclosure.

In the embodiment of FIG. 17, for convenience of description, it is assumed that sensing result report includes sensing results (or sensing data) for two objects (e.g., the objects 1 and 2 of FIG. 15), but the disclosure is not limited thereto. For example, sensing results for various numbers of objects may be included in the sensing result report.

Further, in the embodiment of FIG. 17, for convenience of description, it is assumed that the sensing results for each object included in the sensing results report include distance information, velocity (doppler) information, AoA information, and reception power information for the object, but are not limited thereto. For example, various types of sensing information may be included in the sensing result report.

Referring to FIG. 17, the sensing result report may include sensing results of at least one object. For example, the sensing result report may include a sensing result for the first object and a sensing result for the second object.

As an embodiment, the sensing result for each object may include distance information for the corresponding object, velocity information for the corresponding object, AoA information for the sensing signal reflected from the corresponding object (e.g., AoA azimuth/AoA leveling), and/or reception power information for the sensing signal reflected from the corresponding object.

As such, the sensing result report of the embodiment of FIG. 17 may include only relative sensing values (relative metric) (e.g., relative distance, relative location, relative velocity).

FIG. 18 illustrates a configuration of a sensing result report according to an embodiment of the disclosure.

In the embodiment of FIG. 18, for convenience of description, it is assumed that sensing result report includes sensing results (or sensing data) for two objects (e.g., the objects 1 and 2 of FIG. 15), but the disclosure is not limited thereto. For example, sensing results for various numbers of objects may be included in the sensing result report.

Further, in the embodiment of FIG. 18, for convenience of description, it is assumed that the sensing results for each object included in the sensing results report include distance information, velocity (doppler) information, AoA information, and reception power information for the object, but are not limited thereto. For example, various types of sensing information may be included in the sensing result report.

Referring to FIG. 18, the sensing result report may include location information of the reception role TRP (e.g., the reception role DU of FIG. 16A, or reception role base station of FIG. 16B) transmitting the sensing result report and sensing results for at least one object. For example, the sensing result report may include the location information for the reception role TRP that transmits the sensing result report, the sensing result for the first object, and the sensing result for the second object.

As an embodiment, the location information for the reception role TRP may be obtained by the reception role TRP based on a preset location acquisition method (e.g., a GPS-based method, etc.).

As an embodiment, the sensing result for each object may include distance information for the corresponding object, velocity information for the corresponding object, AoA information for the sensing signal reflected from the corresponding object (e.g., AoA azimuth/AoA leveling), and/or reception power information for the sensing signal reflected from the corresponding object.

As such, the sensing result report of the embodiment of FIG. 18, compared to the sensing result report of the embodiment of FIG. 17, may further include a location value of the reception role TRP as well as a relative sensing value (relative metric). In this case, the transmission role TRP (e.g., the transmission role DU of FIG. 16A, or transmission role base station of FIG. 16B) or CU (e.g., the CU of FIG. 16A) may calculate/obtain an absolute sensing value (absolute metric) (e.g., absolute distance, absolute location, absolute velocity) for the corresponding object using locations of the transmission role TRP and the reception role TRP and received relative sensing value for the corresponding object.

[The operation of the UE in the JCAS system]

Hereinafter, operations (e.g., the communication operations) of the UE in the JCAS system are described. Meanwhile, operations of the UE in the JCAS system with a bistatic sensing structure may be the same as operations of the UE in the JCAS system with monostatic sensing structure.

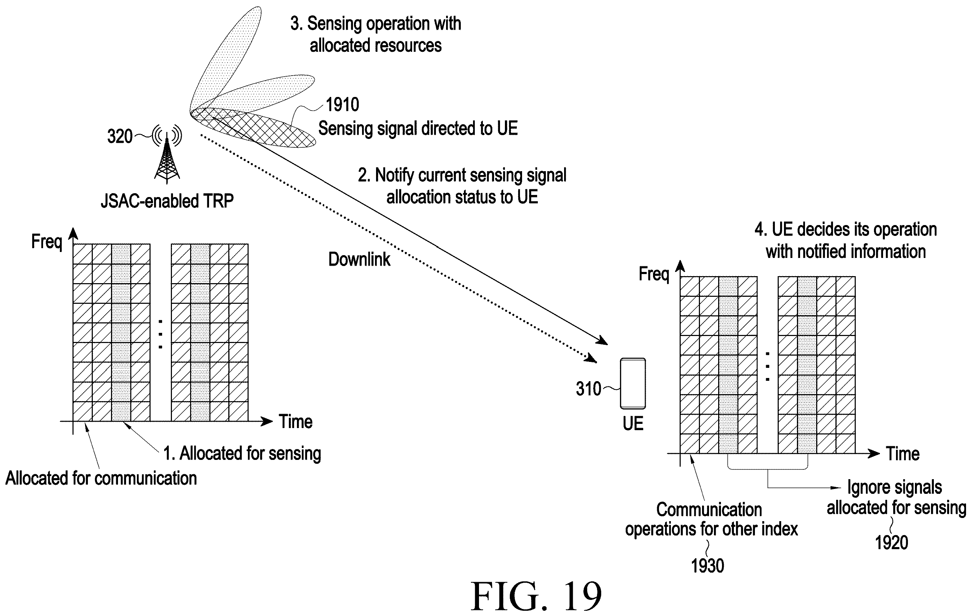

FIG. 19 is a view illustrating a downlink (DL) communication operation of a UE in a JCAS system according to an embodiment of the disclosure.

In the case of JCAS system, in order to perform sensing together with communication, the base station needs to allocate resources for sensing and resources for communication, and provide a notification for the allocated resources to the UE 310. In this case, unlike a general communication system (e.g., the communication system 10 of FIG. 1), the UE 310 needs to perform an operation different from the existing communication operation in the notified resource area (or section) for sensing.

Hereinafter, the DL communication operation of the UE in the JCAS system is exemplarily described with reference to FIG. 19.

Referring to FIG. 19, in operation 1, the TRP (e.g., the transmission role TRP 410 or the reception role TRP 420) may identify resources allocated for sensing. For example, the TRP may identify time and frequency resources allocated for sensing (or sensing signals).

As an embodiment, the resources for sensing may be allocated by the transmission role TRP 410 and notified to the reception role TRP 420, or allocated by the CU of the transmission role TRP 410/reception role TRP 420 and notified to the transmission role TRP 410/reception role TRP 420.

Further, the TRP (e.g., the transmission role TRP 410 or the reception role TRP 420) may identify resources allocated for communication. For example, the TRP may identify time and frequency resources allocated for communication (or communication signals). As illustrated in FIG. 19, the resources allocated for sensing and the resources allocated for communication may not overlap.

As an embodiment, the resources for communication may be allocated by the transmission role TRP 410 and notified to the reception role TRP 420, or allocated by the CU of the transmission role TRP 410/reception role TRP 420 and notified to the transmission role TRP 410/reception role TRP 420.

In operation 2, the TRP (e.g., the transmission role TRP 410 or the reception role TRP 420) may transmit the sensing configuration information including information about resource allocation for sensing (sensing resource allocation information) to the UE 310. As an embodiment, the sensing resource allocation information may include information about time and frequency resources for sensing (or sensing signals) identified in operation 1. Accordingly, the UE 310 may be notified of a current sensing signal allocation status for the sensing signal.

According to an embodiment, the TRP (e.g., the transmission role TRP 410 or the reception role TRP 420) may transmit, to the UE 310, the communication configuration information including the information (DL communication resource allocation information) about resource allocation for DL communication, together with or separately from the sensing configuration information. According to an embodiment, the communication resource allocation information may include information about the time and frequency resources for the communication (or communication signals) identified in operation 1. Accordingly, the UE 310 may be notified of the current resource allocation status for the communication signal.

In operation 3, the TRP (e.g., the transmission role TRP 410 or the reception role TRP 420) may perform a sensing operation using resources (e.g., time and frequency resources) allocated for sensing.

According to an embodiment, the transmission role TRP 410 may transmit a sensing signal using the time and frequency resources allocated for sensing. As an embodiment, the transmission role TRP 410 may transmit a sensing signal through at least one beam. For example, the transmission role TRP 410 may transmit a sensing signal directed to the UE 310 through the beam 1910 directed toward the UE 310.

According to an embodiment, the reception role TRP 420 may receive a reflection (reflection signal) of a sensing signal reflected from a target (e.g., the UE 310, or the target 330 of FIG. 3) and obtain sensing data and/or a sensing result based on the reflection signal.

According to an embodiment, the TRP (e.g., the transmission role TRP 410 or the reception role TRP 420) may perform a communication operation using resources (e.g., time and frequency resources) allocated for communication. For example, the TRP may transmit a communication signal (DL communication signal) through the PDSCH using the time and frequency resources allocated for communication. According to an embodiment, the TRP may transmit a DL communication signal through at least one beam.

In operation 4, the UE 310 may determine an operation to be performed using the received/notified information (e.g., sensing resource allocation information and sensing configuration information). For example, the UE 310 may identify the time and frequency resources allocated for sensing based on the sensing resource allocation information, and may perform an operation based on the identified time and frequency resources.

According to an embodiment, the UE 310 may disregard signals received through time and frequency resources allocated for sensing (1920).

According to an embodiment, the UE 310 may perform a communication operation using time and frequency resources other than the time and frequency resources allocated for sensing (1930). For example, the UE 310 may receive a communication signal (DL communication signal) through the PDSCH using the time and frequency resources allocated for DL communication different from the time and frequency resources allocated for sensing. For example, the UE 310 may receive the DL communication signal in the OFDM symbol(s) having the OFDM index allocated for DL communication, which is different from the index of the OFDM symbol allocated for sensing.

Meanwhile, according to an embodiment, some of the above-described operations 1 to 4 may be omitted, and/or additional operations may be further performed. Further, the operations may be performed in a different order from the illustrated order, or multiple operations may be performed simultaneously.

Meanwhile, in FIG. 19, for convenience of description, a procedure between the TRP 320 and one UE 310 has been described as an example, but embodiments are not limited thereto. For example, a plurality of UEs may be connected to the TRP 320, and in this case, each UE may perform the same procedure as the procedure between the TRP 320 and the UE 310 with the TRP 320.

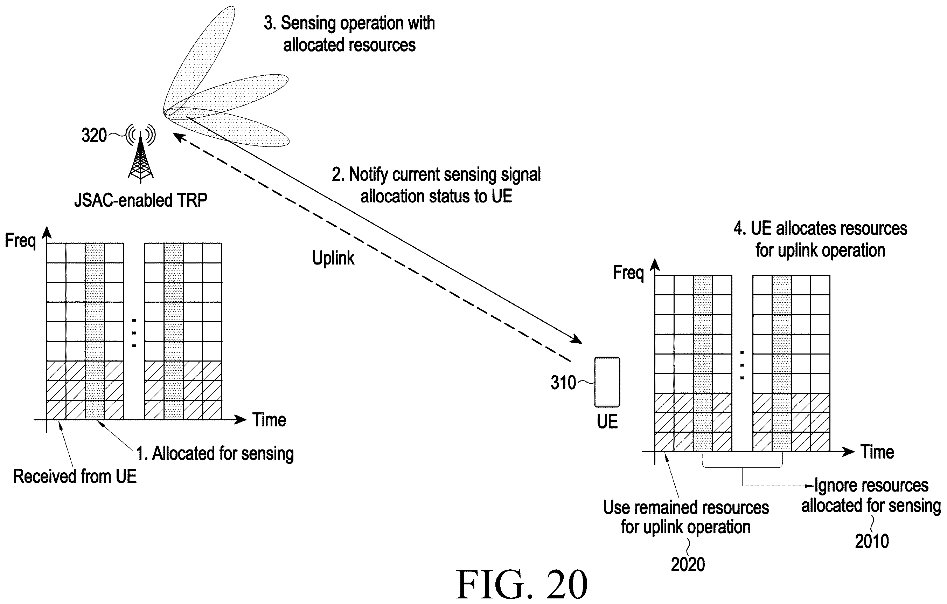

FIG. 20 is a view illustrating an uplink (UL) communication operation of a UE in a JCAS system according to an embodiment of the disclosure.

In the case of the JCAS system, in order to perform sensing together with communication, the base station needs to allocate a resource for sensing and a resource for communication and provide a notification of the allocated resource to the UE 310. In this case, unlike a general communication system (e.g., the communication system 10 of FIG. 1), the UE 310 needs to perform an operation different from the existing communication operation in the notified resource area (or section) for sensing.

Hereinafter, a UL communication operation of a UE in a JCAS system is exemplarily described with reference to FIG. 20.

Referring to FIG. 20, in operation 1, the TRP (e.g., the transmission role TRP 410 or reception role TRP 420) may identify resources allocated for sensing. For example, the TRP may identify time and frequency resources allocated for sensing (or sensing signals).

As an embodiment, the resources for sensing may be allocated by the transmission role TRP 410 and notified to the reception role TRP 420, or allocated by the CU of the transmission role TRP 410/reception role TRP 420 and notified to the transmission role TRP 410/reception role TRP 420.

Further, the TRP (e.g., the transmission role TRP 410 or the reception role TRP 420) may identify resources allocated for communication. For example, the TRP may allocate time and frequency resources for communication (or communication signals). As illustrated in FIG. 20, the resources allocated for sensing and the resources allocated for communication may not overlap.

As an embodiment, the resources for communication may be allocated by the transmission role TRP 410 and notified to the reception role TRP 420, or allocated by the CU of the transmission role TRP 410/reception role TRP 420 and notified to the transmission role TRP 410/reception role TRP 420.

In operation 2, the TRP (e.g., the transmission role TRP 410 or the reception role TRP 420) may transmit the sensing configuration information including information about resource allocation for sensing (sensing resource allocation information) to the UE 310. As an embodiment, the sensing resource allocation information may include information about time and frequency resources for sensing (or sensing signals) identified in operation 1. Accordingly, the UE 310 may be notified of a current sensing signal allocation status for the sensing signal.

According to an embodiment, the TRP (e.g., the transmission role TRP 410 or the reception role TRP 420) may transmit, to the UE 310, the communication configuration information including the information (UL communication resource allocation information) about resource allocation for UL communication, together with or separately from the sensing configuration information. According to an embodiment, the UL communication resource allocation information may include information about the time and frequency resources for the communication (or communication signals) identified in operation 1. Accordingly, the UE 310 may be notified of the current resource allocation status for the communication signal.

In operation 3, the TRP (e.g., the transmission role TRP 410 or the reception role TRP 420) may perform a sensing operation using resources (e.g., time and frequency resources) allocated for sensing.

According to an embodiment, the transmission role TRP 410 may transmit a sensing signal using the time and frequency resources allocated for sensing. As an embodiment, the transmission role TRP 410 may transmit a sensing signal through at least one beam. For example, the transmission role TRP 410 may transmit a sensing signal directed to the UE 310 through the beam directed toward the UE 310.

According to an embodiment, the reception role TRP 420 may receive a reflection (reflection signal) of a sensing signal reflected from a target (e.g., the UE 310, or the target 330 of FIG. 3) and obtain sensing data and/or a sensing result based on the reflection signal.

According to an embodiment, the TRP (e.g., the transmission role TRP 410 or the reception role TRP 420) may perform a communication operation using resources (e.g., time and frequency resources) allocated for communication. For example, the TRP may receive a communication signal (UL communication signal) through the PUSCH using the time and frequency resources allocated for UL communication. According to an embodiment, the TRP may receive a UL communication signal through at least one beam.

In operation 4, the UE 310 may determine an operation to be performed using the received/notified information (e.g., sensing resource allocation information and sensing configuration information). For example, the UE 310 may perform an operation based on sensing resource allocation information.

According to an embodiment, the UE 310 may disregard sensing signals received through time and frequency resources allocated for sensing (2010).

According to an embodiment, the UE 310 may perform a communication operation using time and frequency resources other than the time and frequency resources allocated for sensing (2020). For example, the UE 310 may transmit a communication signal (UL communication signal) using the time and frequency resources allocated for UL communication, different from the time and frequency resources allocated for sensing. For example, the UE 310 may transmit the UL communication signal in the OFDM symbol(s) having the OFDM index allocated for UL communication, which is different from the index of the OFDM symbol allocated for sensing.

Meanwhile, according to an embodiment, some of the above-described operations 1 to 4 may be omitted, and/or additional operations may be further performed. Further, the operations may be performed in a different order from the illustrated order, or multiple operations may be performed simultaneously.

Meanwhile, in FIG. 20, for convenience of description, a procedure between the TRP 320 and one UE 310 has been described as an example, but embodiments are not limited thereto. For example, a plurality of UEs may be connected to the TRP 320, and in this case, each UE may perform the same procedure as the procedure between the TRP 320 and the UE 310 with the TRP 320.

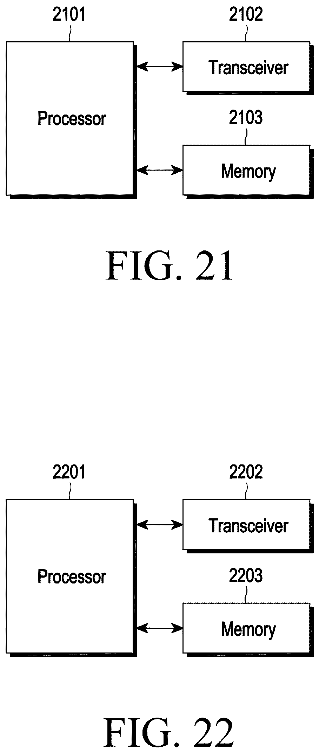

FIG. 21 is a view illustrating an example configuration of a UE according to an embodiment of the disclosure.

In FIG. 21, a UE may include a processor 2101, a transceiver 2102, and memory 2103. The processor 2101, transceiver 2102, and memory 2103 of the UE of FIG. 7 may be operated according to the method(s) described above in connection with FIGS. 1 to 20. However, the components of the UE are not limited thereto. For example, the UE may include more or fewer components than the above-described components. The processor 2101, the transceiver 2102, and the memory 2103 may be implemented in the form of at least one chip.

The transceiver 2102 collectively refers to a receiver and a transmitter and may transmit and receive signals to/from a UE or another network entity. The transmitted/received signals may include at least one of control information and data. To that end, the transceiver 2102 may include an RF transmitter for frequency-up converting and amplifying signals transmitted and an RF receiver for low-noise amplifying signals received and frequency-down converting the frequency of the received signals. This is merely an embodiment of the transceiver 2102, and the components of the transceiver 2102 are not limited to the RF transmitter and the RF receiver. Further, the transceiver 2102 may receive signals through a communication scheme defined in the 3GPP standard, output the signals to the processor 2101, and transmit the signals output from the processor 2101. Further, the transceiver 2102 may receive the signal and output it to the processor 2101 and transmit the signal output from the processor 2101 to another network entity through the network.

The memory 2103 may store programs and data necessary for the operation of the UE according to at least one of the embodiments of FIGS. 1 to 20. The memory 2103 may store control information and/or data that is included in the signal obtained by the UE. The memory 2103 may include a storage medium, such as ROM, RAM, hard disk, CD-ROM, and DVD, or a combination of storage media.

The processor 2101 may control a series of processes so that the UE may operate according to at least one of the embodiments of FIGS. 1 to 20. The processor 2101 may include at least one processor.

FIG. 22 is a view illustrating an example configuration of a base station according to an embodiment of the disclosure.

According to an embodiment, the base station may be a transmission role TRP, a reception role TRP, or a CU.

In FIG. 22, a base station may include a processor 2201, a transceiver 2202, and memory 2203. The processor 2201, transceiver 2202, and memory 2203 of the base station may be operated according to the method(s) described above in connection with FIGS. 1 to 20. However, the components of the base station are not limited thereto. For example, the base station may include more or fewer components than the above-described components. The processor 2201, the transceiver 2202, and the memory 2203 may be implemented in the form of at least one chip.

The transceiver 2202 collectively refers to a receiver and a transmitter and may transmit and receive signals to/from a UE or another network entity. The transmitted/received signals may include at least one of control information and data. To that end, the transceiver 2202 may include an RF transmitter for frequency-up converting and amplifying signals transmitted and an RF receiver for low-noise amplifying signals received and frequency-down converting the frequency of the received signals. This is merely an embodiment of the transceiver 2202, and the components of the transceiver 2202 are not limited to the RF transmitter and the RF receiver. Further, the transceiver 2202 may receive signals through a communication scheme defined in the 3GPP standard, output the signals to the processor 2201, and transmit the signals output from the processor 2201. Further, the transceiver 2202 may receive the signal and output it to the processor 2201 and transmit the signal output from the processor 2201 to another network entity through the network.

The memory 2203 may store programs and data necessary for the operation of the base station according to at least one of the embodiments of FIGS. 1 to 20. The memory 2203 may store control information and/or data that is included in the signal obtained by the base station. The memory 2203 may include a storage medium, such as ROM, RAM, hard disk, CD-ROM, and DVD, or a combination of storage media.

The processor 2201 may control a series of processes so that the base station may operate according to at least one of the embodiments of FIGS. 1 to 20. The processor 2201 may include at least one processor.

According to an embodiment, the transmission role TRP (first TRP) may identify first sensing configuration information for bistatic sensing.

According to an embodiment, the transmission role TRP (first TRP) may transmit second sensing configuration information generated based on the first sensing configuration information to a UE.

According to an embodiment, the transmission role TRP (first TRP) may transmit a sensing signal for the bistatic sensing based on the first sensing configuration information.

According to an embodiment, the transmission role TRP (first TRP) may receive a sensing result report from a second TRP associated with the first TRP.

In an embodiment, the first sensing configuration information may include resource allocation information for the bistatic sensing.

According to an embodiment, the transmission role TRP (first TRP) may broadcast set ID information indicating an ID of a sensing parameter set including a plurality of sensing parameters using a system information block (SIB).

According to an embodiment, the transmission role TRP (first TRP) may broadcast a sensing parameter bitmap including bitmap data associated with a setting value for a plurality of sensing parameters, using an SIB.

According to an embodiment, the transmission role TRP (first TRP) may, when the first TRP and the second TRP are base station-level TRPs, select the second TRP as a reception role TRP for the bistatic sensing operation, and transmit the first sensing configuration information to the second TRP. In an embodiment, the second sensing configuration information may include role information for the bistatic sensing operation, and the role information includes information indicating that the second TRP is the reception role TRP.

According to an embodiment, the transmission role TRP (first TRP) may, when the first TRP and the second TRP are distribute unit (DU)-level TRPs, receive the first sensing configuration information from central units (CUs) of the first TRP and the second TRP. In an embodiment, the first configuration information may further include role information indicating that the first TRP is a transmission role TRP for the bistatic sensing.

As an embodiment, the first sensing configuration information may further include: information about the transmission period of the sensing signal, and information about transmission offset where the sensing signal is transmitted in the transmission period. The transmission period and the transmission offset may be set in slot units.

According to an embodiment, the transmission role TRP (first TRP) may periodically transmit the sensing signal based on the information about the transmission period and information about the transmission offset.

According to an embodiment, the transmission role TRP (first TRP) may further include terminating the transmission of the sensing signal when a stop trigger for terminating the periodic transmission of the sensing signal is identified.

As an embodiment, the stop trigger occurs when a preset condition is met, and the preset condition may be met when the sensing operation related to the bistatic configuration is terminated, or when the first sensing configuration information is changed.

As an embodiment, the information about the resource allocation includes information for time resource allocation for the bistatic sensing and information for frequency resource allocation for the bistatic sensing. The information for frequency resource allocation may designate a continuous frequency for the sensing.

As an embodiment, the information for frequency resource allocation may include start RE index information indicating the index of the start resource element (RE) and end RE index information indicating the index of the end RE, for the continuous frequencies.

As an embodiment, the first sensing configuration information may further include: sensing waveform information indicating a type of waveform to be used for the bistatic sensing, and information indicating the number of accumulated OFDM symbols used for Doppler processing.

As an embodiment, the sensing result report includes sensing result information for at least one object sensed based on the sensing signal. The result information may include at least one of distance information for the corresponding object, velocity information for the corresponding object, angle of arrival (AoA) information for the sensing signal, or reception power information for the sensing signal.

As an embodiment, the sensing result report may further include location information of the second TRP.

According to an embodiment, the reception role TRP (second TRP) may receive first sensing configuration information for bistatic sensing.

According to an embodiment, the reception role TRP (second TRP) may transmit second sensing configuration information generated based on the first sensing configuration information to the UE.

According to an embodiment, the reception role TRP (second TRP) may receive the sensing signal for the bistatic sensing transmitted from first TRP based on the first sensing configuration information.

According to an embodiment, the reception role TRP (second TRP) may transmit the sensing result report to the first TRP.

In an embodiment, the first sensing configuration information may include resource allocation information for the bistatic sensing.

According to an embodiment, the reception role TRP (second TRP) may include broadcasting the set ID information indicating an ID of the sensing parameter set including the plurality of sensing parameters using a system information block (SIB).

According to an embodiment, the reception role TRP (second TRP) may broadcast a sensing parameter bitmap including bitmap data associated with configuration values for a plurality of sensing parameters using an SIB.

According to an embodiment, the reception role TRP (second TRP) may receive the first sensing configuration information from the first TRP when the first TRP and the second TRP are base station level TRPs, and receive the first sensing configuration information from central units (CUs) of the first TRP and the second TRP when the first TRP and the second TRP are distribute unit (DU) level TRPs. As an embodiment, the first sensing configuration information may include role information indicating that the second TRP is the reception role TRP.

As an embodiment, the first sensing configuration information may further include: information about the transmission period of the sensing signal, and information about transmission offset where the sensing signal is transmitted in the transmission period. The transmission period and the transmission offset may be set in slot units.

As an embodiment, the first sensing configuration information may further include: sensing waveform information indicating a type of waveform to be used for the bistatic sensing, and information indicating the number of accumulated OFDM symbols used for Doppler processing.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

**Claims**

1. A method of a first transmission and reception point (TRP) in a system supporting communication and sensing, the method comprising:

   identifying first sensing configuration information for a bistatic sensing operation;
   transmitting, to a user equipment (UE), second sensing configuration information generated based on the first sensing configuration information;
   transmitting a sensing signal for the bistatic sensing operation based on the first sensing configuration information; and
   receiving, from a second TRP associated with the first TRP, a sensing result report,
   wherein the first sensing configuration information includes resource allocation information for the bistatic sensing operation.

2. The method of claim 1, wherein transmitting the second sensing configuration information to the UE comprises:
   broadcasting set identifier (ID) information indicating an ID of a sensing parameter set including a plurality of sensing parameters, using a system information block (SIB).

3. The method of claim 1, wherein in case that the first TRP and the second TRP are base station-level TRPs, the method further comprises:

   selecting the second TRP as a reception role TRP for the bistatic sensing operation; and
   transmitting, to the second TRP, the first sensing configuration information, and
   wherein the second sensing configuration information includes role information for the bistatic sensing operation, and the role information includes information indicating that the second TRP is the reception role TRP.

4. The method of claim 1, wherein the first sensing configuration information further includes sensing waveform information indicating a type of waveform to be used for the bistatic sensing operation and information indicating a number of accumulated orthogonal frequency division multiplexing (OFDM) symbols used for Doppler processing.

5. The method of claim 1, wherein the sensing result report includes sensing result information for at least one object sensed based on the sensing signal, and
   wherein the sensing result information includes at least one of: distance information for a corresponding object, velocity information for the corresponding object, angle of arrival (AoA) information for the sensing signal, or reception power information for the sensing signal.

6. A method of a second transmission and reception point (TRP) in a system supporting communication and sensing, the method comprising:

   receiving first sensing configuration information for a bistatic sensing operation;
   transmitting, to a user equipment (UE), second sensing configuration information generated based on the first sensing configuration information;

receiving a sensing signal for the bistatic sensing operation transmitted from a first TRP based on the first sensing configuration information; and

transmitting, to the first TRP, a sensing result report,

wherein the first sensing configuration information includes resource allocation information for the bistatic sensing operation.

7. The method of claim 6, wherein transmitting the second sensing configuration information to the UE comprises: broadcasting set identifier (ID) information indicating an ID of a sensing parameter set including a plurality of sensing parameters, using a system information block (SIB).

8. The method of claim 6, wherein receiving the first sensing configuration information comprises:

in case that the first TRP and the second TRP are base station-level TRPs, receiving, from the first TRP, the first sensing configuration information; and

in case that the first TRP and the second TRP are distribute unit (DU)-level TRPs, receiving, from central units (CUs) of the first TRP and the second TRP, the first sensing configuration information, and

wherein the first sensing configuration information includes role information indicating that the second TRP is the reception role TRP.

9. The method of claim 6, wherein the sensing result report includes sensing result information for at least one object sensed based on the sensing signal, and

wherein the result information includes at least one of: distance information for a corresponding object, velocity information for the corresponding object, angle of arrival (AoA) information for the sensing signal, or reception power information for the sensing signal.

10. A first transmission and reception point (TRP) in a system supporting communication and sensing, comprising:

a transceiver; and

at least one processor, wherein the at least one processor is configured to:

identify first sensing configuration information for a bistatic sensing operation;

transmit, to a user equipment (UE), second sensing configuration information generated based on the first sensing configuration information; and

transmit a sensing signal for the bistatic sensing operation based on the first sensing configuration information, and

comprising receiving a sensing result report from a second TRP associated with the first TRP,

wherein the first sensing configuration information includes resource allocation information for the bistatic sensing operation.

11. The first TRP of claim 10, wherein the at least one processor is configured to broadcast set identifier (ID) information indicating an ID of a sensing parameter set including a plurality of sensing parameters, using a system information block (SIB).

12. The first TRP of claim 10, wherein the at least one processor is configured to, in case that the first TRP and the second TRP are base station-level TRPs:

select the second TRP as a reception role TRP for the bistatic sensing operation; and

transmit, to the second TRP, the first sensing configuration information,

wherein the second sensing configuration information includes role information for the bistatic sensing operation, and the role information includes information indicating that the second TRP is the reception role TRP, and

wherein the first sensing configuration information further includes sensing waveform information indicating a type of waveform to be used for the bistatic sensing operation and information indicating a number of accumulated OFDM symbols used for Doppler processing.

13. The first TRP of claim 10, wherein the sensing result report includes sensing result information for at least one object sensed based on the sensing signal, and

wherein the sensing result information includes at least one of distance information for a corresponding object, velocity information for the corresponding object, angle of arrival (AoA) information for the sensing signal, or reception power information for the sensing signal.

14. A second transmission and reception point (TRP) in a system supporting communication and sensing, comprising:

a transceiver; and
at least one processor, wherein the at least one processor is configured to:

receive first sensing configuration information for a bistatic sensing operation;
transmit, to a user equipment (UE), second sensing configuration information generated based on the first sensing configuration information; and
receive a sensing signal for the bistatic sensing operation transmitted from a first TRP based on the first sensing configuration information; and
transmit, to the first TRP, a sensing result report,
wherein the first sensing configuration information includes resource allocation information for the bistatic sensing operation.

15. The second TRP of claim 14, wherein the at least one processor is configured to:

broadcast set identifier (ID) information indicating an ID of a sensing parameter set including a plurality of sensing parameters using a system information block (SIB);
in case that the first TRP and the second TRP are base station-level TRPs, receive, from the first TRP, the first sensing configuration information; and
in case that the first TRP and the second TRP are distribute unit (DU)-level TRPs, receive, from central units (CUs) of the first TRP and the second TRP, the first sensing configuration information,
wherein the first sensing configuration information includes role information indicating that the second TRP is the reception role TRP,
wherein the sensing result report includes sensing result information for at least one object sensed based on the sensing signal, and
wherein the result information includes at least one of distance information for a corresponding object, velocity information for the corresponding object, angle of arrival (AoA) information for the sensing signal, or reception power information for the sensing signal.

FIG. 1

FIG. 2A

FIG. 2B

300

Resource allocation
(time, frequency, etc)

JCAS-enabled TRP

320

Communication
channel

Sensing channel

Target 2

UE 1

Target 1

330

310

UE 2

# FIG. 3

400

410

Tx role TRP

420

Rx role TRP

Sensing result

Object 1

Object 2

# FIG. 4

Time/freq resources allocated for sensing

Freq

Time

1. Define Tx/Rx role for sensing operation

Tx role TRP

410

2. Notify role & sensing resource allocation status to Rx role TRP

Rx role TRP

420

6. Rx role TRP reports sensing result to Tx role TRP

4. Sensing operation with allocated resources

3. Notify sensing resource allocation status to UE associated with each TRPs

UE

310a

5. Each UE decides operation with notified information

Freq

Time

UE

310b

FIG. 5

14 OFDM symbols in a 1st slot | 2nd slot

Interval between adjacent OFDM symbols for sensing $T_{sens}^{sym}$

subcarriers

Allocated symbol for sensing

# FIG. 6A

Number of slots for Doppler processing

. . .

Duration of accumulated symbols for Doppler processing $T_{sens}^{accum}$

# FIG. 6B

710

**Tx role TRP**

711
Comm. waveform
generation

712
Sensing waveform
generation

713
Time/frequency
domain allocation

714
Transmission

**Rx role TRP**

724
Comm. operation

725
Sensing operation

722
Waveform
segmentation

721
Waveform
detection

723
Sensing waveform generation
based on pre-defined info.

720

# FIG. 7

FIG. 8A

810b

**Tx role TRP**

811b

| Symbol modulation |

812b

| Waveform generation |

813b

| Transmission |

820b

**Rx role TRP**

824b

| Comm. operation |

822b

| Waveform demodulation |

821b

| Waveform detection |

825b

| Sensing operation |

823b

| Sensing sequence generation based on pre-defined info. |

# FIG. 8B

```
┌─────────────────────────┐     ┌─────────────────────────┐     ┌─────────────────────────┐
│  Sensing-ResourceConfig │─────│  SensingResourceSet #1  │─────│   SensingResource #1    │
└─────────────────────────┘     └─────────────────────────┘     └─────────────────────────┘

· ResourceConfigID               ┌─────────────────────────┐     ┌─────────────────────────┐
· Transmission mode              │  SensingResourceSet #2  │─────│   SensingResource #2    │
                                 └─────────────────────────┘     └─────────────────────────┘
                                              ⋮                               ⋮
                                 · Semi-persistent start/stop trigger    · Sensing signal structure
                                 · Aperiodic start trigger/offset        · Waveform type (included/not included)
                                                                         · Time/freq allocation
                                                                         · Number of symbols for Doppler processing
                                                                         · Period & slot offset
```

# FIG. 9A

| Set ID | Slot repetition period | Slot offset | OFDM symbol index for each slot | Start RE index | End RE index | Sensing waveform | Number of symbols for Doppler processing |
|---|---|---|---|---|---|---|---|
| 1 | 4 | 1 | 7 | 0 | 1024 | OFDM | 64 |
| 2 | 1 | 0 | 0, 6 | 256 | 512 | FMCW | 256 |
| ⋮ | | | | | | | |

## FIG. 9B

| Slot repetition period | Slot offset | Time domain allocation (OFDM symbol indices for each slot) | Frequency domain allocation | Sensing waveform | Number of symbols for Doppler processing |
|---|---|---|---|---|---|
| 1, 2, 4, 8 | 0, 1, 2, 3 | 0: single symbol (8th OFDM symbol in a slot)<br>1: two symbols (1st 8th OFDM symbols) | 0: Full bandwidth (every RBs at TRP)<br>1: Half bandwidth (first half RBs at TRP) | 0: FMCW<br>1: OFDM | 0: 32<br>1: 64<br>2: 128<br>3: 256 |

## FIG. 9C

EP 4 645 975 A1

| Notification field | Notification format | Description |
| --- | --- | --- |
| Rx role indicator | 0, 1 | Purpose of indicating whether corresponding TRP is in Rx role |
| Slot repetition period | 1, 2, 4, 8 | Period to which sensing symbol is allocated (period is indicated by number of slots) |
| Slot offset | 0, 1, 2, 3 | Slot unit offset to which sensing symbol is allocated in periodic transmission |
| Time domain allocation | [0, 6], [7] | OFDM symbol indices for each slot |
| Frequency domain allocation | Full bandwidth, half bandwidth | Sensing signal allocation status in frequency domain |
| Sensing waveform | FMCW, OFDM | Specifying waveform type to be used for sensing operation |
| Number of symbols for Doppler processing | 32, 64, 128, 256 | Number of accumulated symbols to be used for Doppler processing |

# FIG. 9D

EP 4 645 975 A1

DU-level Tx/Rx role

CU        Tx role DU        Rx role DU

Tx/Rx role BS selection &
Sensing resource configuration        ~1010a

Tx role assignment,
sensing resource allocation status
1020a ~

Rx role assignment,
sensing resource allocation status
1030a ~

FIG. 10A

BS-level Tx/Rx role

Tx role BS        Rx role BS

Rx role BS selection &
Sensing resource configuration        ~1010b

Rx role assignment,
sensing resource allocation status        ~1020b

FIG. 10B

320

TRP

310

UE

Set ID

~1110a

Sensing parameter decoding
based on sensing configuration

~1120a

# FIG. 11A

320

TRP

310

UE

Set ID

~1110b

Sensing parameter
decoding based on Set ID

~1120b

# FIG. 11B

FIG. 11C

FIG. 12A

FIG. 12B

Sensing parameter configuration ................................ Periodic sensing stop trigger

Periodic transmission with pre-defined configurations

# FIG. 13

DU-level Tx/Rx role

CU     Tx role DU     Rx role DU

Tx/Rx role BS selection &
Sensing resource configuration ~1410a

Tx role assignment,
sensing resource allocation status
1420a

Rx role assignment,
sensing resource allocation status
1430a

Periodic sensing stop trigger
1440a

Periodic sensing stop trigger
1450a

# FIG. 14A

BS-level Tx/Rx role

Tx role BS          Rx role BS

Rx role BS selection &
Sensing resource configuration ~1410b

Rx role assignment,
sensing resource allocation status ~1420b

Periodic sensing stop trigger ~1430b

FIG. 14B

1. Sensing signal transmission
   at allocated resources

2. Sensing operation
   at Rx role TRP

Tx role TRP

Rx role TRP

410~

3. Sensing result report to Tx role TRP

~420

Object 1

Object 2

FIG. 15

DU-level Tx/Rx role

FIG. 16A

BS-level Tx/Rx role

FIG. 16B

| Range | Doppler | Angle (Azim/Elev) | Received Power | Range | Doppler | Angle (Azim/Elev) | Received Power |
|---|---|---|---|---|---|---|---|

Object 1          Object 2

FIG. 17

| Position of Rx role TRP | Range | Doppler | Angle (Azim/Elev) | Received Power | Range | Doppler | Angle (Azim/Elev) | Received Power |
|---|---|---|---|---|---|---|---|---|

Object 1 — Range, Doppler, Angle (Azim/Elev), Received Power

Object 2 — Range, Doppler, Angle (Azim/Elev), Received Power

FIG. 18

EP 4 645 975 A1

3. Sensing operation with allocated resources

320 JSAC-enabled TRP

1910 Sensing signal directed to UE

2. Notify current sensing signal allocation status to UE

Downlink

Freq

Time

1. Allocated for sensing

Allocated for communication

4. UE decides its operation with notified information

Freq

310 UE

Time

Ignore signals allocated for sensing

1920

Communication operations for other index

1930

FIG. 19

EP 4 645 975 A1

FIG. 20

3. Sensing operation with allocated resources

320 JSAC-enabled TRP

2. Notify current sensing signal allocation status to UE

Uplink

310 UE

Freq
Time
Received from UE
1. Allocated for sensing

4. UE allocates resources for uplink operation

Freq
Time

Ignore resources allocated for sensing
2010

Use remained resources for uplink operation
2020

2101           2102

Processor     Transceiver

2103

Memory

# FIG. 21

2201           2202

Processor     Transceiver

2203

Memory

# FIG. 22

## INTERNATIONAL SEARCH REPORT

International application No.

**PCT/KR2024/001889**

### A. CLASSIFICATION OF SUBJECT MATTER

**H04W 64/00**(2009.01)i; **H04W 8/00**(2009.01)i; **G01S 17/00**(2006.01)i; **G01S 13/06**(2006.01)i; **H04W 72/04**(2009.01)i; **H04W 48/10**(2009.01)i; **H04W 24/10**(2009.01)i; **H04W 88/08**(2009.01)i; **H04W 88/18**(2009.01)i

According to International Patent Classification (IPC) or to both national classification and IPC

### B. FIELDS SEARCHED

Minimum documentation searched (classification system followed by classification symbols)

H04W 64/00(2009.01); G01S 13/00(2006.01); G01S 13/46(2006.01); G01S 7/40(2006.01); G01S 7/41(2006.01); H04B 7/06(2006.01); H04W 48/14(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 바이스태틱(bistatic), 센싱(sensing), 구성(configuration), 보고(report), 자원 할당 (resource allocation), TRP(transmission and reception point)

### C. DOCUMENTS CONSIDERED TO BE RELEVANT

| Category* | Citation of document, with indication, where appropriate, of the relevant passages | Relevant to claim No. |
|---|---|---|
| Y | US 2022-0179042 A1 (QUALCOMM INCORPORATED) 09 June 2022 (2022-06-09)<br>See paragraphs [0058], [0065]-[0066], [0110], [0113], [0133]-[0136], [0145], [0156], [0158] and [0165]; and figures 11c, 12c, 23 and 25. | 1-15 |
| Y | WO 2022-236248 A1 (GOOGLE LLC) 10 November 2022 (2022-11-10)<br>See paragraphs [0107]-[0108]; and figure 8. | 1-15 |
| A | WO 2022-164582 A1 (QUALCOMM INCORPORATED) 04 August 2022 (2022-08-04)<br>See paragraphs [0151]-[0169]; and figures 12-15. | 1-15 |
| A | US 2020-0107249 A1 (GOOGLE LLC) 02 April 2020 (2020-04-02)<br>See paragraphs [0071]-[0074]; and figure 7. | 1-15 |
| A | US 2022-0120857 A1 (TELEFONAKTIEBOLAGET LM ERICSSON (PUBL)) 21 April 2022 (2022-04-21)<br>See claims 1-16. | 1-15 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 May 2024** | **13 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 645 975 A1**

| INTERNATIONAL SEARCH REPORT | | International application No. |
|---|---|---|
| Information on patent family members | | **PCT/KR2024/001889** |

| Patent document cited in search report | | | Publication date (day/month/year) | Patent family member(s) | | | Publication date (day/month/year) |
|---|---|---|---|---|---|---|---|
| US | 2022-0179042 | A1 | 09 June 2022 | CN | 116057404 | A | 02 May 2023 |
| | | | | EP | 4211488 | A1 | 19 July 2023 |
| | | | | KR | 10-2023-0062823 | A | 09 May 2023 |
| | | | | US | 11846721 | B2 | 19 December 2023 |
| | | | | WO | 2022-056080 | A1 | 17 March 2022 |
| WO | 2022-236248 | A1 | 10 November 2022 | CN | 117242368 | A | 15 December 2023 |
| | | | | EP | 4314891 | A1 | 07 February 2024 |
| | | | | KR | 10-2024-0004781 | A | 11 January 2024 |
| WO | 2022-164582 | A1 | 04 August 2022 | BR | 112023014374 | A2 | 24 October 2023 |
| | | | | CN | 116710804 | A | 05 September 2023 |
| | | | | EP | 4285147 | A1 | 06 December 2023 |
| | | | | JP | 2024-504933 | A | 02 February 2024 |
| | | | | KR | 10-2023-0134493 | A | 21 September 2023 |
| | | | | TW | 202231115 | A | 01 August 2022 |
| | | | | US | 11828831 | B2 | 28 November 2023 |
| | | | | US | 2022-0236394 | A1 | 28 July 2022 |
| US | 2020-0107249 | A1 | 02 April 2020 | EP | 3824674 | A1 | 26 May 2021 |
| | | | | EP | 3824674 | B1 | 10 November 2021 |
| | | | | US | 11408973 | B2 | 09 August 2022 |
| | | | | WO | 2020-068396 | A1 | 02 April 2020 |
| US | 2022-0120857 | A1 | 21 April 2022 | CN | 113167852 | A | 23 July 2021 |
| | | | | EP | 3914923 | A1 | 01 December 2021 |
| | | | | EP | 3914923 | A4 | 07 September 2022 |
| | | | | US | 11789120 | B2 | 17 October 2023 |
| | | | | WO | 2020-153883 | A1 | 30 July 2020 |

Form PCT/ISA/210 (patent family annex) (July 2022)